# EUROPÄISCHE PATENTSCHRIFT

(11) **EP 4 194 225 B1**
(45) Veröffentlichungstag und Bekanntmachung des Hinweises auf die Patenterteilung: **09.10.2024**
(21) Anmeldenummer: 22211068.6
(22) Anmeldetag: 02.12.2022
(51) Int. Cl.: B60B 1/00, B60B 5/02, B60B 21/02, B29C 37/00, B29L 31/32

(54) **FELGE UND VERFAHREN ZUR HERSTELLUNG EINER FELGE**
RIM AND METHOD FOR MANUFACTURING A RIM
JANTE ET PROCÉDÉ DE FABRICATION D'UNE JANTE

(30) Priorität: 13.12.2021 DE 102021006137
(43) Veröffentlichungstag der Anmeldung: 14.06.2023
(73) Patentinhaber: DT Swiss AG, 2504 Biel (CH)
(72) Erfinder: Henig, Andreas, 2504 Biel (CH)
(74) Vertreter: BSB Patentanwälte Schütte & Engelen Partnerschaft mbB

(56) Entgegenhaltungen:
- EP-A1- 1 985 435
- EP-A1- 3 819 095

## Beschreibung

Die Erfindung betrifft ein Verfahren zur Herstellung einer Felge aus Faserverbundwerkstoff für im bestimmungsgemäßen Gebrauch regelmäßig wenigstens teilweise muskelbetriebene Fahrzeuge und insbesondere Fahrräder und eine mit dem erfindungsgemäßen Verfahren hergestellte Felge.

Im Stand der Technik sind Felgen aus faserverstärkten Kunststoffen bekannt geworden, mit denen das Gewicht der Felgen verringert werden kann. Gleichzeitig erreichen solche Felgen bei geringerem Gesamtgewicht eine vergleichbare oder sogar höhere Stabilität wie Metallfelgen. Ein Nachteil derartiger Felgen ist allerdings die aufwendige Herstellung, da viele Herstellungsschritte meist von Hand durchgeführt werden müssen, was zu höheren Kosten führt. Außerdem sind die vielen manuellen Verfahrensschritte fehleranfällig, wodurch die Ausschussrate steigt und die Herstellkosten nochmals erhöht werden.

Andererseits sind die Stückzahlen hochwertiger Fahrradfelgen nicht so groß, dass sich die Entwicklung und der Aufbau einer vollautomatisierten Fertigung rechnen würde.

Dokument EP 3 819 095 A1 offenbart ein Verfahren zur Herstellung einer Felge aus Faserverbundwerkstoff für mit einer Scheibenbremse ausgerüstete Laufräder von Fahrrädern.

Es ist deshalb die Aufgabe der vorliegenden Erfindung, ein Verfahren zur Herstellung einer Felge aus Faserverbundwerkstoff zur Verfügung zu stellen, mit dem Felgen mit besserer Qualität und vorzugsweise einer geringeren Ausschussrate herstellbar sind.

Diese Aufgabe wird gelöst durch ein Verfahren mit den Merkmalen des Anspruchs 1 und durch eine Felge mit den Merkmalen des Anspruchs 15.

Bevorzugte Weiterbildungen und Ausgestaltungen der Erfindung sind Gegenstand der jeweiligen Unteransprüche. Weitere Vorteile und Merkmale der vorliegenden Erfindung ergeben sich aus der allgemeinen Beschreibung und der Beschreibung der Ausführungsbeispiele.

Ein erfindungsgemäßes Verfahren dient zur Herstellung einer Felge aus Faserverbundwerkstoff für (im bestimmungsgemäßen und typischen Betrieb) wenigstens teilweise muskelbetriebene Fahrzeuge und insbesondere Fahrräder und wird unter Verwendung einer Werkzeugeinrichtung durchgeführt. Die Felge ist insbesondere für mit einer Scheibenbremse ausgerüstete Laufräder vorgesehen und benötigt insbesondere keine Bremsflanke. Die Werkzeugeinrichtung weist eine Mehrzahl von Werkzeugkomponenten auf. Die Werkzeugkomponenten umfassen zwei Formeinrichtungen und eine Ringeinrichtung. Insbesondere sind zwei Werkzeugkomponenten als Formeinrichtungen und es ist eine Werkzeugkomponente als Ringeinrichtung ausgebildet. Die Formeinrichtungen umfassen jeweils eine Flankenkontaktfläche zur Ausbildung einer seitlichen Felgenflanke und die Ringeinrichtung umfasst eine Felgenbettkontaktfläche (zur Ausbildung des Felgenbettes).

Das Verfahren wird mit den folgenden Verfahrensschritten in dieser oder einer anderen sinnvollen Reihenfolge durchgeführt:
- Es wird wenigstens ein Teil der Werkzeugkomponenten bereitgestellt und es wird (wenigstens) eine erste glatte Lackschicht auf wenigstens eine Felgenkontaktfläche an den Werkzeugkomponenten aufgebracht. Eine Felgenkontaktfläche kann z. B. eine Flankenkontaktfläche oder die Felgenbettkontaktfläche sein.
- Die erste glatte Lackschicht (auf der Werkzeugkomponente oder den Werkzeugkomponenten) wird (im Wesentlichen) getrocknet.
- Es wird (wenigstens) eine erste Faserlage des wenigstens einen Faserverbundwerkstoffs auf die Flankenkontaktfläche der Formeinrichtungen aufgebracht, welche die äußeren Faserlagen (wenigstens eines überwiegenden Teils) der Sichtfläche der zugehörigen Felgenflanken bilden;

- Es wird wenigstens eine erste Faserlage des Faserverbundwerkstoffs auf die Ringeinrichtung aufgebracht, welche das Felgenbett bildet. Die erste Faserlage wird dabei insbesondere auf die Felgenbettkontaktfläche aufgebracht.
- Die Werkzeugkomponenten der Werkzeugeinrichtung werden miteinander verbunden und die Werkzeugeinrichtung wird geschlossen/verschlossen;
- Die Werkzeugeinrichtung wird aufgeheizt und die Lackschicht wird mit dem aushärtenden Faserverbundwerkstoff fest verbunden;
- Die Werkzeugeinrichtung wird verfestigt und insbesondere ausgehärtet und abgekühlt (und geöffnet) und die Felge wird entnommen.

Damit ist die Felge im Wesentlichen fertiggestellt. Anschließend kann gegebenenfalls die Entgratung von Kanten und/oder die Einbringung von Speichenlöchern erfolgen. Die (erste) Lackschicht bildet eine glatte Oberfläche und kann im Rahmen dieser Anmeldung auch durchgängig als (erste) glatte Lackschicht bezeichnet werden. Der Begriff Lackschicht kann mit Bezug auf die Erfindung auch in glatte Lackschicht geändert werden.

Das erfindungsgemäße Verfahren hat viele Vorteile. Ein erheblicher Vorteil des erfindungsgemäßen Verfahrens ist, dass die äußerste Schicht wenigstens teilweise durch die Lackschichten gebildet wird. Dadurch werden Fehlstellen vermieden und kleine und kleinste Unregelmäßigkeiten in dem Faserverbundwerkstoff abgedeckt. Sollten vereinzelt Hohlstellen oder eine Art von Löchern in dem Faserverbundwerkstoff auftreten, werden diese durch den Lack ausgefüllt und dadurch praktisch unsichtbar. Grundsätzlich kann die Anzahl von Fehlstellen oder nicht perfekten Oberflächenstellen durch das Herstellverfahren an sich aber schon erheblich reduziert werden oder es können solche Stellen (nahezu) vollständig vermieden werden. Die Ausschussrate kann verringert und die Qualität erhöht werden.

Ein erheblicher Vorteil des erfindungsgemäßen Verfahrens ist, dass die im bestimmungsgemäßen Betrieb äußeren Sichtflächen (unmittelbar) durch die Formeinrichtungen geformt und durch die glatt Lackschicht gebildet werden, auf die jeweils erste Faserlagen aufgelegt werden. Dadurch kann eine homogene, reproduzierbare und vollflächige Anlage der Faserlagen an die Formeinrichtungen der Werkzeugeinrichtung gewährleistet werden.

Dadurch, dass sich vorzugsweise die vollständige sichtbare äußere Oberfläche der fertigen Felge durch unmittelbar an den Formeinrichtungen der Werkzeugeinrichtung anliegenden Flächen ergibt, kann die Oberflächenqualität der Felgenflanken nochmals erheblich verbessert werden. Es kann die Anzahl von Lufteinschlüssen und anderen Defekten stark reduziert werden, sodass die Ausschussquote deutlich reduziert werden kann. Der Prozess ist weniger fehleranfällig.

Eventuell dennoch vorhandene oder auftauchende Fehlstellen an dem Faserverbundmaterial werden durch die Lackschicht(en) ausgeglichen und optisch abgedeckt oder aufgefüllt bzw. praktisch unsichtbar gemacht. Dadurch kann auch bei einem "genaueren" Hinsehen keine Fehlstelle entdeckt werden, selbst wenn an der eigentlichen Oberfläche des Faserverbundwerkstoffes kleine Oberflächenrauigkeiten oder Fehlstellen vorhanden sein sollten. Solche "kosmetischen" Fehlstellen werden zuverlässig abgedeckt und können nur mir absolut genauer Betrachtung oder insbesondere erst mit optischen Hilfsmitteln (starke Beleuchtung und/oder Bertachtung mit einer Lupe und/oder einem Mikroskop) festgestellt werden, nicht aber bei Betrachtung aus Abständen von z. B. einem Meter.

Außerdem wird durch die Lackauftragung in der Form (In-Mould-Coating) eine schützende Abdeckschicht zur Verfügung gestellt, die die Beständigkeit gegen UV-Strahlung (durch die Sonne) und gegen andere Umwelteinflüsse vergrößert. Durch die Lackschicht kann außerdem eine mattere Oberfläche erzeugt werden, die einen hochwertigeren Eindruck erzeugt. Die vorzugsweise transparente Lackschicht lässt vorzugsweise die Struktur des Faserverbundmaterials erkennen.

In besonders bevorzugten Ausgestaltungen ist die Felgenkontaktfläche in einer eine Symmetrieachse einschließenden Querschnittsebene gekrümmt ausgebildet. Insbesondere ist die Felge (im Querschnitt) bauchig ausgebildet. Vorzugsweise liegt eine breitestete Stelle der Felge zwischen dem radialen äußeren Ende der Felge (an den Felgenhörnern) und einem radiale inneren Ende an dem Felgenbett.

Zur Ausbildung einer "linken" Felgenflanke ist vorzugsweise eine linke Formeinrichtung vorgesehen und für die andere und "rechte" Felgenflanke ist dementsprechend vorzugsweise eine rechte Formeinrichtung vorgesehen. Die Formeinrichtungen können spiegelsymmetrisch oder auch identisch ausgebildet sein, sodass jede der beiden Formeinrichtungen zur Ausbildung der "linken" Felgenflanke dienen kann. Bei asymmetrischen Felgen sind die beiden Formeinrichtungen unterschiedlich ausgestaltet.

Auch ein Faserverzug an den Faserlagen kann verringert und weitgehend vermieden werden, wodurch die Qualität und die Stabilität der derart hergestellten Felge steigen. Die Lage und Orientierung der Fasern in den äußeren Faserlagen ist jederzeit definiert, was die Stabilität und die Optik verbessert.

Vorzugsweise werden die Formeinrichtungen (mit den Flankenkontaktflächen) bereitgestellt und es wird eine erste Lackschicht auf die Flankenkontaktflächen der Formeinrichtungen aufgebracht, welche an der fertigen Felge die äußere (bzw. äußerste) Oberfläche (wenigstens eines überwiegenden Teils) der Felgenflanken bildet.

Vorzugsweise wird auch die Ringeinrichtung zunächst mit einer Lackschicht versehen, bevor Faserlagen aufgebracht werden. Vorzugsweise wird die Ringeinrichtung aus mehreren Ringsegmenten gebildet. Die Ringeinrichtung kann insgesamt oder die Ringsegmente können einzeln mit einer Lackschicht beschichtet werden. Insbesondere wird auf die Ringsegmente oder Teile der Ringeinrichtung wenigstens eine Lackschicht aufgetragen, die die Felgenbettkontaktfläche und/oder die inneren Kontaktflächen für die Felgenhörner zur Verfügung stellen. Dann ist es möglich, die vollständige äußere Oberfläche der Felge mit einem Lacküberzug direkt aus der Herstellform heraus zur Verfügung zu stellen.

In vielen Fällen reicht es aber aus, eine Lackschicht auf den im Betrieb sichtbaren äußeren Oberflächen auszubilden, also an dem Felgenboden, den Felgenflanken (die regelmäßig gemeinsam den Felgenboden bilden) und den meist an den Felgenflanken radial außen ausgebildeten Felgenhörnern. Das sind die Sichtflächen im normalen Betrieb. Das Felgenbett kann - muss aber nicht - mit einer Lackschicht bedeckt sein. Auch die Innenseiten der Felgenhörner können - müssen aber nicht - mit einer Lackschicht bedeckt sein.

Vorzugsweise werden nacheinander wenigstens zwei Lackschichten aufgetragen. Dabei ist vorzugsweise ein zeitlicher Abstand vorgesehen. Der zeitliche Abstand kann vorbestimmt sein oder von den aktuellen Bedingungen abhängen. Vorzugsweise wird jedenfalls mindestens so lange gewartet, bis die erste bzw. vorhergehende Lackschicht trocken geworden bzw. ausgehärtet ist. In allen Ausgestaltungen ist es bevorzugt, dass wenigstens eine dritte (und vierte) Lackschicht aufgetragen wird.

Möglich und bevorzugt ist es, dass wenigstens eine Lackschicht aufgesprüht wird. Möglich ist es aber auch, den Lack über einen Pinsel oder einen Quast aufzutragen. Das Auftragen erfolgt vorzugsweise manuell. Möglich ist aber auch eine Automation, bei der eine Sprühdüse oder mehrere Sprühdüsen automatisch bewegt und gesteuert werden. Grundsätzlich sind die Stückzahlen aber nicht so hoch, dass sich eine Automation lohnt.

In allen Ausgestaltungen ist es bevorzugt, dass die Lackschichten bei einer Temperatur der Werkzeugkomponenten zwischen 10°C und 80°C oder 100°C aufgetragen werden. Insbesondere wird wenigstens eine Lackschicht bei einer Temperatur der Werkzeugkomponenten und/oder Umgebungstemperatur von wenigstens 20°C aufgetragen. Insbesondere beträgt die Temperatur der Werkzeugkomponenten bei dem Lackauftrag weniger als 60°C und besonders bevorzugt weniger als 40°C. Die exakte Temperatur hängt von dem verwendeten Lack ab.

Vorzugsweise ist eine Gesamtdicke der (insgesamt) resultierenden Lackschicht (alle Lackschichten insgesamt) geringer bzw. dünner als 0,8 mm und insbesondere geringer als 0,7 mm und vorzugsweise kleiner als 0,5 mm oder 0,3 mm. Dadurch kann Gewicht gespart werden, da die aufgetragene Lackmenge reduziert wird. Bei einem nachträglichen Lackieren wird regelmäßig eine erheblich größere Menge an Lack aufgetragen, z. B. die doppelte oder dreifache Menge. Mit der Erfindung kann das Gewicht erheblich reduziert werden. Da sich die Felge im späteren Betrieb dreht, kann die Schwungmasse deutlich reduziert werden.

Vorzugsweise ist ein Gewicht des (insgesamt auf die Felge) aufgetragenen Lacks kleiner als 15 Gramm oder 10 Gramm und insbesondere kleiner als 6 oder 5 oder 4 Gramm. Die exakte Menge hängt von der Felgenform und der Felgenart ab. Bei Felgen für Mountainbikes wird aufgrund der größeren Breite mehr aufgetragen als bei schmalen und nicht hohen Felgen für Rennräder. Bei hohen (Rennrad-) Felgen mit einer radialen Felgenflankenhöhe von z. B. 60 mm wird naturgemäß regelmäßig mehr Lack aufgetragen als bei schmalen Rennradfelgen mit einer Flankenhöhe von z.B. 30 mm.

Vorzugsweise beträgt ein Endgewicht bzw. Trockengewicht der resultierenden Lackschicht (insgesamt) weniger als 10 Gramm oder 7 Gramm. Vorzugsweise ist ein Gewichtsverhältnis des Trockengewichts der resultierenden Lackschicht an dem Gesamtgewicht der Felge kleiner als 1,5% oder kleiner als 1,25% oder sogar kleiner als 1%.

Besonders bevorzugt wird wenigstens eine Lackschicht mit wenigstens einer Sprühdüse aufgetragen wird. Es kann z. B. eine Sprühpistole verwendet werden. Die Bewegungsgeschwindigkeit und der Durchmesser der Sprühdüse(n) können angepasst oder optimiert werden.

Es ist möglich und bevorzugt, dass wenigstens ein Lack verwendet wird, welcher aus einer Gruppe von Lacken entnommen ist, welche 1K- und 2K-Lacke, Gelcoats, Lackschichten auf Basis von Isophthalsäure und/oder Neopentylglykol, Polyurethanlacke, Lacke auf Acrylatharzbasis und andere Lacke mehr umfasst. Dabei ist die Oberfläche besonders bevorzugt glatt ausgebildet.

Solche Lacke (z. B. - aber nicht nur - auf Basis von Isophthalsäure und/oder Neopentylglykol) können eine hohe oder sehr hohe Hydrolysebeständigkeit aufweisen. Diese und andere Lacke können auch hohe oder höchste Anforderungen an UV-Stabilität und Glanzgraderhaltung erfüllen. Möglich ist auch die Verwendung von 1K- oder 2K-Lacken, insbesondere von 2K-Polyurethan-Lack oder dergleichen mehr. Mit solchen Lacken kann eine Beschichtung von faserverstärkten Kunststoffbauteilen in der Negativform erfolgen.

Bei solchen Lacken ist es möglich, dass kovalente Bindungen mit allen Epoxi-, Laminier-, Infusions- und Deckschichtharzen erzeugt werden. Dadurch kann ein Verbund mit sehr hoher Zwischenlagenhaftung generiert werden. Dabei kann der Lack hochtransparent ausgebildet sein, um z. B. die Carbonteile sichtbar zu machen.

In allen Ausgestaltungen ist es möglich, dass die oder wenigstens eine Lackschicht wenigstens teilweise oder vollständig pigmentiert ist. Es ist möglich und bevorzugt, dass z.B. über zwei oder mehr Sprühdüsen ein Muster aufgetragen und/oder eingebracht wird. Beispielsweise kann ein Farbmuster eingebracht oder aufgetragen werden, welches an der fertigen Felge erkennbar ist. Ein solches Muster kann dem Design dienen oder die Wiedererkennbarkeit erhöhen. Das Muster oder eines der Muster kann auch z.B. Typangaben oder Herstellerhinweise oder ein Design oder eine (registrierte oder eingetragene) Marke wiedergeben. Das Muster kann Textangaben oder grafische Symbole umfassen.

Zum Aushärten des Faserverbundwerkstoffes und zum Verbinden des Faserverbundwerkstoffes mit der Lackschicht wird die Werkzeugeinrichtung vorzugsweise auf eine Temperatur zwischen 50°C und 180°C und insbesondere zwischen 100°C und 150°C temperiert.

In allen Ausgestaltungen ist es bevorzugt, dass die Oberflächen der Formeinrichtungen (wenigstens teilweise) strukturiert sind. Eine solche Struktur kann als Mikrostruktur ausgebildet sein und eine (geringe) Oberflächenrauigkeit mit einer Rautiefe von 1 µm oder 2µm oder 5 µm ausbilden. Über solche Maßnahmen kann eine (hochwertige) matte Oberflächenstruktur zur Verfügung gestellt werden, die optisch sehr ansprechend ist.

In bevorzugten Weiterbildungen werden zusätzlich folgende Schritte in dieser oder einer anderen sinnvollen Reihenfolge durchgeführt:
- Es wird nach dem Auftragen der Lackschicht(en) auf die Werkzeugkomponenten eine Formeinrichtung der beiden Formeinrichtungen ausgewählt und bereitgestellt und es wird die erste Faserlage des Faserverbundwerkstoffs auf die Flankenkontaktfläche der ausgewählten Formeinrichtung aufgebracht, welche als Sichtlage wenigstens einen überwiegenden Teil der Sichtfläche der zugehörigen Felgenflanke bildet.
- Es wird die andere Formeinrichtung bereitgestellt und es wird (wenigstens) eine erste Faserlage des Faserverbundwerkstoffs auf die Flankenkontaktfläche der anderen Formeinrichtung aufgebracht, welche als Sichtlage wenigstens einen überwiegenden Teil der Sichtfläche der anderen Felgenflanke bildet.
- Es wird auf die Ringeinrichtung, die eine umlaufende Felgenbettkontaktfläche aufweist, wenigstens eine erste Faserlage des Faserverbundwerkstoffs aufgebracht, welche das Felgenbett (oder wenigstens einen Teil davon) bildet.
- Die Ringeinrichtung wird an eine der Formeinrichtungen angelegt und die andere Formeinrichtung wird daran angelegt und die Ringeinrichtung und die Formeinrichtungen werden miteinander verbunden.

Dadurch kann ein besonders ansprechende Felge hergestellt werden. Durch die verbesserte Optik der hergestellten Felge ergibt sich somit die Möglichkeit, die Felge aus der Form heraus (englisch: "Out of the Mold") herzustellen. Durch die klar definierte Form und Lage der Faserlagen und der Fasern darin, können Fehlstellen in der ausgehärteten Felge stark verringert werden.

Im Stand der Technik sind hingegen Verfahren bekannt, bei denen zunächst Faserlagen in ein Hilfswerkzeug eingelegt werden. Ein so vorgeformtes Faserlagenbündel wird dann in die eigentliche Werkzeugform übertragen und dort eingelegt. Bei der Übertragung der Faserlagen können sich einzelne Fasern und Faserlagen verschieben, sodass die Lage und Form der einzelnen Faserlagen nicht immer reproduzierbar ist. Das Verfahren wird aber unter anderem deshalb bislang so durchgeführt, da die eigentliche Werkzeugform so schwer ist, dass sie nicht ohne Weiteres durch eine Person oder mehrere Personen) manuell transportierbar ist. Bei der Erfindung sind die einzelnen Teile der Werkzeugeinrichtung hingegen jeweils problemlos separat durch eine einzelne Person transportierbar. Deshalb kann das Auflegen jedenfalls der Sichtlagen und auch von den Verstärkungslagen direkt in die Form erfolgen.

Vorzugsweise werden die Faserlagen in die Werkzeugeinheiten eingelegt und die an der fertigen Felge sichtbaren Außenlagen werden direkt an die Werkzeugeinheiten angedrückt. Vorzugsweise bilden die jeweiligen Formeinrichtungen jeweils vollständig den sichtbaren Bereich der Felgenflanken aus. Die Ringeinrichtung bildet vorzugsweise den sichtbaren Bereich des Felgenbettes aus.

In einer bevorzugten Weiterbildung werden die Faserlagen an die Formeinrichtungen der Werkzeugeinrichtung angedrückt, um einen vollflächigen Kontakt zwischen den Faserlagen und den Flankenkontaktflächen zu gewährleisten. Dadurch können Lufteinschlüsse und Fehlstellen vermieden und somit die Qualität erhöht werden.

In besonders bevorzugten Weiterbildungen werden alle Faserlagen, die als Sichtlagen im bestimmungsgemäßen Gebrauch die (durch die insbesondere wenigstens teiltransparente Lackschicht hindurch) sichtbaren Außenflächen bilden an die Formeinrichtungen und die Ringeinrichtung der Werkzeugeinrichtung angedrückt, um einen vollflächigen Kontakt zwischen den Faserlagen und den Flankenkontaktflächen zu gewährleisten. Dadurch können Struktur und Qualität verbessert werden.

Ein Nacharbeiten der sichtbaren Oberfläche und insbesondere ein Nachlackieren der äußeren Oberfläche nach dem Entnehmen aus der Werkzeugeinrichtung zur Verdeckung von Lufteinschlüssen und anderen Fehlstellen kann vermieden werden. Dadurch ergibt sich ein besonders vorteilhaftes Verfahren. Dadurch, dass eine Nachlackierung der sichtbaren Oberflächen nicht nötig ist, kann ein weiterer Verfahrensschritt eingespart werden, wodurch die Kosten reduziert werden. Ein anderer erheblicher Vorteil ist, dass das Gesamtgewicht der Felge reduziert werden kann, da das Gewicht für die aufgetragene Schicht entfällt.

In besonders vorteilhaften Ausgestaltungen wird ein Hilfsformteil der Werkzeugeinrichtung verwendet. Dabei wird ein zu der ausgewählten Formeinrichtung passendes Hilfsformteil der Werkzeugeinrichtung mit der zuvor ausgewählten Formeinrichtung verbunden, sodass die (ausgewählte) Formeinrichtung zusammen mit dem Hilfsformteil eine um eine Symmetrieachse der Felge umlaufende (gemeinsame) Formfläche für den Felgenboden bildet. Die Formfläche für den Felgenboden wird bereichsweise auf der ausgewählten Formeinrichtung und bereichsweise auf dem Hilfsformteil ausgebildet. Auf das Hilfsformteil wird keine Lackschicht aufgetragen. Ein Höhenversatz an der Berührungsstelle mit der ausgewählten Formeinrichtung tritt aufgrund der geringen Schichtdicke der Lackschichten praktisch nicht auf oder stört nicht, da dort später die erste Faserlage der anderen Formeinrichtung aufliegt. Oder der Höhenversatz wird bei der Auslegung der Formteile berücksichtigt.

Bei dieser Ausgestaltung wird die erste Faserlage nicht nur auf die Flankenkontaktfläche der ausgewählten Formeinrichtung aufgebracht, sondern die erste Faserlage wird (einstückig) auch auf den Felgenbodenbereich des Hilfsformteils aufgebracht, um im Bereich des Felgenbodens eine durchgängige erste Faserlage zu bilden. Diese durchgängige erste Faserlage erstreckt sich nicht nur über den Felgenbodenbereich der (ausgewählten) Formeinrichtung, sondern auch über den Felgenbodenbereich bzw. Felgenbodenformbereich des Hilfsformteils. So wird die erste Faserlage vorzugsweise durchgehend auf die Flankenkontaktfläche der ausgewählten Formeinrichtung und auf den Felgenbodenbereich des Hilfsformteils aufgebracht, sodass im Bereich des Felgenbodens eine durchgängige und einstückige erste Faserlage zur Verfügung gestellt wird. Durch diese Weiterbildungen wird eine besonders stabile und hochwertige Felge hergestellt.

In bevorzugten Weiterbildungen wird das Hilfsformteil anschließend von der ausgewählten Formeinrichtung entfernt und es werden (unmittelbar danach oder vorzugsweise später) die beiden mit Faserlagen belegten Formeinrichtungen miteinander verbunden. Das Entfernen des Hilfsformteils erfolgt insbesondere so vorsichtig, dass die drapierten Faserlagen in dem Bereich des Felgenbodens (in etwa oder wenigstens im Wesentlichen) ihre Form behalten. Die im Bereich des Felgenbodens von der ausgewählten Formeinrichtung überstehenden Abschnitte der Faserlagen bilden zusammen mit den auf die andere Formeinrichtung aufgelegten Faserlagen die andere Felgenflanke. Die "überstehenden" Abschnitte bilden aber an der fertigen Felge keine Sichtfläche.

Es ist bevorzugt, dass nach dem Entfernen des Hilfsformteils zunächst die Ringeinrichtung angelegt wird, und dass danach die andere Formeinrichtung angelegt wird.

In einfachen Ausgestaltungen wird die ausgewählte Formeinrichtung zum Belegen mit Faserlagen auf einen zum Beispiel horizontalen Tisch gelegt und es wird die erste Faserlage und es werden gegebenenfalls weitere Faserlagen auf die Flankenkontaktfläche der ausgewählten Formeinrichtung und gegebenenfalls das Hilfsformteil aufgelegt und an die jeweiligen Kontaktflächen angedrückt. Parallel oder danach oder davor wird die andere Formeinrichtung beispielsweise auf einen z. B. horizontalen Tisch aufgelegt und es wird die andere Formeinrichtung mit einer ersten Faserlage belegt und es werden gegebenenfalls weitere Faserlagen auf die andere Formeinrichtung aufgelegt.

Parallel dazu oder davor oder danach kann die Ringeinrichtung mit den entsprechenden Faserlagen belegt werden. Nach dem Entfernen des Hilfsformteils wird die Ringeinrichtung mit den auf die Felgenbettkontaktfläche aufgebrachten Faserlagen auf die ausgewählte Formeinrichtung aufgelegt. Anschließend bzw. danach kann die andere Formeinrichtung mit den aufgelegten Faserlagen auf die ausgewählte Formeinrichtung und die Ringeinrichtung aufgelegt werden. Bei dieser Ausgestaltung werden die Formeinrichtungen jeweils schrittweise auf einen horizontalen Tisch aufgelegt. Möglich ist es aber auch, dass der Tisch unter einem Winkel zur Horizontalen geneigt angeordnet ist, oder, dass die Formeinrichtungen senkrecht im Raum positioniert werden und die Faserlagen von der Seite an die entsprechenden Formeinrichtungen angedrückt werden.

In bevorzugten Weiterbildungen bildet die auf die ausgewählte Formeinrichtung aufgebrachte erste Faserlage im Bereich der Flankenkontaktfläche die Sichtlage mit der Sichtfläche der zugehörigen Felgenflanke und im Felgenbodenbereich des Hilfsformteils eine Verstärkungslage des Felgenbodens und nicht die Sichtlage mit der Sichtfläche der anderen Felgenflanke. Dadurch wird eine vorteilhafte Verbindung der beiden Hälften erreicht. Die beiden Hälften der Felge können symmetrisch oder asymmetrisch ausgebildet sein.

Vorzugsweise wird der sichtbare Felgenboden durch die radial inneren Bereiche der Felgenflanken bzw. durch die radial inneren Bereiche der ersten Faserlagen gebildet, die auf die ausgewählte Formeinrichtung bzw. die andere Formeinrichtung aufgebracht werden.

In vorteilhaften Ausgestaltungen weisen die beiden Formeinrichtungen und das Hilfsformteil jeweils eine senkrecht zu einer Symmetrieachse der Felge verlaufende Trennfläche auf. An der Trennfläche können die Formeinrichtungen und das Hilfsformteil jeweils wahlweise aneinander angelegt werden. So wird vorzugsweise zunächst das Hilfsformteil an die ausgewählte Formeinrichtung angelegt und nach dem Auflegen der entsprechenden Faserlagen wieder entfernt. Anschließend wird die andere Formeinrichtung mit der zugehörigen Trennfläche an die Trennfläche der ausgewählten Formeinrichtung angelegt.

Vorzugsweise wird in die miteinander verbundenen Formeinrichtungen wenigstens eine Verstärkungslage (wenigstens in dem Bereich des Felgenbodens) eingebracht.

Denkbar ist ein Verfahren auch ohne den Einsatz eines Hilfsformteils. Dann werden die Formeinrichtungen zunächst jeweils getrennt mit jeweils ersten Faserlagen als Sichtlagen belegt. Anschließend können die beiden Formeinrichtungen zusammengefügt werden und es kann radial von außen auf den Felgenboden wenigstens eine Verstärkungs- oder Verbindungslage aufgelegt werden. Im Anschluss daran könnten einzelne mit Faserlagen belegte Ringsegmente von außen eingeschoben werden, die anschließend vorsichtig entfernt werden, wobei die darauf aufgelegten Faserlagen zurückbleiben. Es könnte dann anschließend eine umlaufende äußere Faserlage aufgelegt werden und die Ringsegmente wieder eingeführt und zu der Ringeinrichtung verbunden werden. Im Anschluss kann eine Aushärtung erfolgen.

Besonders bevorzugt ist eine Reihenfolge der Verfahrensschritte, bei der auf die ausgewählte Formeinrichtung das Hilfsformteil aufgelegt wird, nach dem Aufbringen erster Faserlagen das Hilfsformteil entfernt und die Ringeinrichtung mit den zuvor darauf aufgelegten Faserlagen aufgelegt wird. Schließlich wird die andere Formeinrichtung mit den darauf aufgebrachten bzw. aufgelegten Faserlagen aufgelegt.

In allen Ausgestaltungen ist es bevorzugt, dass Felgenhörner an den beiden Felgenflanken ausgebildet werden. Insbesondere wird wenigstens ein Felgenhorn wenigstens teilweise durch Faserlagen gebildet, welche auf eine der Formeinrichtungen und auf die Ringeinrichtung aufgebracht sind. Das bedeutet, dass vorzugsweise ein Felgenhorn sowohl durch auf eine Formeinrichtung aufgebrachte Faserlagen als auch durch auf die Ringeinrichtung aufgebrachte Faserlagen gebildet wird. Das erhöht die Stabilität.

In vorteilhaften Weiterbildungen wird in dem Kreuzungsbereich von dem Felgenbett und der Felgenflanke wenigstens ein Faserstrang zur Verstärkung eingelegt. Ein solcher Faserstrang kann aus einer Mehrzahl von Filamenten oder aus einem Bündel von Filamenten bestehen oder solche Filamente umfassen. Möglich ist es auch, dass zum Beispiel zu einem Zopf geflochtene Filamente oder zu einer Schnur verbundene oder um einander gedrehte Filamente als Faserstrang eingesetzt werden. Solche eingelegten Faserstränge können die Kreuzungsbereiche von Felgenbett und Felgenflanke und dem Felgenhorn verstärken.

In allen Ausgestaltungen ist es bevorzugt, dass die Ringeinrichtung in Umfangsrichtung wenigstens zwei und insbesondere drei oder mehr Ringsegmente umfasst. Besonders bevorzugt sind in Umfangsrichtung drei Ringsegmente vorhanden. Möglich ist es auch, nur zwei Ringsegmente zu verwenden, die sich dann über einen Winkel von jeweils 180° erstrecken. Bevorzugt werden drei Ringsegmente verwendet, sodass sich jedes einzelne Ringsegment über einen Umfangswinkel von deutlich kleiner als 180° erstreckt. Bevorzugt sind die Ringsegmente gleich ausgestaltet, sodass bei drei Ringsegmenten jedes vorzugsweise ein Winkelbereich von 120° abdeckt. Denkbar ist auch, dass die einzelnen Ringsegmente sich über unterschiedliche Winkelbereiche erstrecken. Insgesamt erstrecken sich die Ringsegmente über den vollständigen Umfang.

Vorzugsweise umfasst die Ringeinrichtung in axialer Richtung (parallel zur Symmetrieachse der Felge) quer zu der Umfangsrichtung wenigstens zwei und insbesondere drei oder mehr Ringsegmente. So ist es möglich, dass die Ringeinrichtung insgesamt aus neun Ringsegmenten besteht. Jeweils drei Ringsegmente ergeben einen Ring. Die drei Ringe (mit jeweils drei Ringsegmenten) sind in axialer Richtung nacheinander angeordnet. Die Ringsegmente können in axialer Richtung versetzt zueinander angeordnet sein. Die Ringsegmente bilden insgesamt die Ringeinrichtung, die radial innen die Felgenbettkontaktfläche ausbildet.

Die axial mittleren Ringsegmente können insbesondere keilförmig ausgebildet sein. Dadurch wird es möglich, dass die mittleren Ringsegmente nach der Herstellung zunächst entnommen werden können. Anschließend können die anderen Ringsegmente entnommen werden, die beispielsweise einen Hinterschnitt an den Felgenhörnern ausbilden, um radial nach innen überstehende Enden der Felgenhörner zur Verfügung zu stellen.

Denkbar ist es aber auch, dass die axial mittleren Ringsegmente insgesamt einen scheibenförmigen Ring und keine Keilform ausbilden. Auch dann können die axial äußeren Ringsegmente einen Hinterschnitt an den Felgenhörnern ausbilden.

In vorteilhaften Ausgestaltungen ist ein Schließring vorgesehen, der außen um die miteinander verbundenen Formeinrichtungen und die Ringeinrichtung gelegt wird. Der Schließring kann radial von außen angelegt werden und den Zusammenhalt der Komponenten untereinander verstärken. Der Schließring kann insofern auch als äußerer Klemmring bezeichnet werden. Möglich ist es auch, dass auf einen Schließring verzichtet wird, insbesondere wenn die Formeinrichtungen und die Ringeinrichtung anderweitig miteinander verbunden werden.

Vorzugsweise wird die mit den Faserlagen bestückte Werkzeugeinrichtung vor dem Aushärten evakuiert. Besonders bevorzugt wird die Werkzeugeinrichtung in eine Presseinrichtung eingebracht und/oder beheizt. Dadurch kann die Verfestigung bzw. das Aushärten des Faserverbundwerkstoffs unterstützt werden.

In allen Ausgestaltungen ist es besonders bevorzugt, dass mit wenigstens einem Harz getränkte Faserlagen verwendet werden. Solche mit Matrixmaterial (insbesondere Harz) versehenen oder getränkten Faserlagen können auch als Prepregs bezeichnet werden und weisen vorzugsweise eine zur Aushärtung (wenigstens im Wesentlichen) genügende Menge an Matrixmaterial (und vorzugsweise an Harz) auf. Besonders vorteilhaft ist der Einsatz von Prepregs. Denkbar ist es auch, dass Matrixmaterial oder Harzmaterial in die fertig bestückte Werkzeugeinrichtung (zusätzlich) eingebracht wird. Beispielsweise kann Matrixmaterial oder Harzmaterial eingespritzt oder eingesaugt werden. Möglich ist es auch, dass Faserlagen, Fasermatten, Gewebematten oder dergleichen als Prepregs verwendet werden und zusätzlich noch (etwas) Harzmaterial eingebracht wird.

In allen Ausgestaltungen ist es bevorzugt, dass ein aufblasbarer Schlauch (in den Bereich der späteren Hohlkammer) eingelegt wird, bevor die Formeinrichtungen mit der Ringeinrichtung verbunden werden. Vorzugsweise wird der Schlauch nach dem Befestigen der Formeinrichtungen mit der Ringeinrichtung aufgeblasen. Eine Verbindung nach außen zum Aufblasen bildet zum Beispiel die spätere Ventilöffnung. Dadurch kann der Schlauch später entnommen werden.

Es ist bevorzugt, dass nach der Entnahme der Felge aus der Werkzeugeinrichtung Speichenlöcher eingebracht werden.

Ein weiteres erfindungsgemäßes Verfahren dient zur Herstellung einer Felge für wenigstens teilweise muskelbetriebene Fahrzeuge und insbesondere Fahrräder. Dabei werden Faserlagen in Werkzeugeinheiten eingelegt. Die an der fertigen Felge fühlbaren Außenflächen werden durch eine auf die Werkzeugeinheiten aufgebrachte Lackschicht gebildet, welche sich beim Aushärten der Faserlagen damit fest verbindet. An sich "sichtbar" ist die äußere Faserlage, da regelmäßig die Lackschicht wenigstens teiltransparent ausgebildet ist.

Vorzugsweise werden die Faserlagen nach dem Aufbringen der Lackschicht in die Werkzeugeinheiten eingelegt. Dabei werden die an der fertigen Felge äußeren bzw. sichtbaren Außenlagen direkt an die Werkzeugeinheiten (mittelbar) angedrückt (bzw. genau genommen unmittelbar an die Lackschicht). Dadurch kann eine vorteilhafte Felge hergestellt werden, bei der keine und jedenfalls keine wesentlichen Nacharbeiten (der Sichtfläche der) äußeren Felge nötig werden.

In allen Ausgestaltungen werden vor dem Auftragen der Lackschicht(en) auf die Werkzeugkomponenten zunächst die Werkzeugkomponenten vorbereitet, d. h. insbesondere gesäubert. Zusätzlich zur üblichen Vorbereitung werden insbesondere die Stellen, welche nicht lackiert werden sollen, mit Hilfe von Abdeckeinheiten (wie z. B. Klebeband oder Klebe- oder Haftstickern oder dergleichen) abgedeckt.

Weiterhin wird der aufzutragende Lack gemäß Datenblatt vorbereitet und z.B. angerührt oder vermischt.

Vorzugsweise wird als erstes dann ein spritzbarer In-Mold Primer für faserverstärkte Bauteile (z.B. auf Epoxid-Basis) aufgetragen. Angerührt wird es z. B. im Verhältnis 100:10. Die Schichtdicke des insbesondere durch ein Sprühverfahren aufgetragenen Primers kann dabei insbesondere zwischen 40 und 200 µm betragen.

Beim Auftragen der Lackschicht werden insbesondere drei dünne Schichten mit einer (Handelsüblichen) Lackierpistole in die kalte Mold (20°C) aufgetragen. Dabei kann der Eingangsdruck z. B. zwischen 2 und 3 bar betragen, insbesondere 2,5 bar. Die Sprühdüse kann insbesondere zwischen 0,5 mm und 4 mm Durchmesser aufweisen, insbesondere zwischen 1 mm und 2 mm. Gute Erfahrungen wurden mit einer Düse von 1,5 mm Durchmesser gemacht.

Vorzugsweise werden die ersten zwei Schichten in nebliger Form aufgetragen, die dritte Schicht wird insbesondere deckend aufgetragen. Eine vorteilhafte Wartezeit zwischen den Schichten beträgt ca. 5min. Das Aushärten des Lacks erfolgt insbesondere bei 60° C in einer Presseinrichtung (die hier vornehmlich zum Heizen dient). Geheizt werden kann auch über andere Mittel.

Nach dem Auskühlen der Werkzeugeinrichtung ("Mold") an Luft, gegebenenfalls mit konvektiver Unterstützung, werden die Faserlagen aufgebracht. Danach erfolgt das Aushärten und Entformen.

Eine erfindungsgemäße Felge für wenigstens teilweise muskelbetriebene Fahrzeuge und insbesondere Fahrräder weist gegenüberliegende Felgenflanken, ein Felgenbett und einen Felgenboden auf, an dem sich insbesondere im radial innersten Punkt die Felgenflanken treffen. Die Felge wird hergestellt aus wenigstens einem Faserverbundwerkstoff mit einem Verfahren, wie es zuvor beschrieben wurde. In einer bevorzugten Weiterbildung besteht die im bestimmungsgemäßen Betrieb sichtbare äußere Oberfläche wenigstens überwiegend oder vollständig aus dem wenigstens einen Faserverbundwerkstoff. Das gilt abgesehen von etwaigen Felgenösen und Typangaben und z. B. im Vergleich zur Felgenoberfläche kleinen Aufklebern, wobei der Faktor der Fläche von zum Beispiel Aufklebern zur Felgenoberfläche kleiner 1/5 oder 1/10 oder 1/100 beträgt. Die äußerste Lage und die fühlbare Außenlage wird durch eine Lackschicht gebildet.

Die erfindungsgemäße Felge ist sehr vorteilhaft und bietet auch ohne Nachbearbeitung der äußeren Oberfläche und insbesondere ohne nachträgliche Lackierung der äußeren Oberfläche nach der Entnahme aus der Werkzeugeinrichtung eine hohe Oberflächengüte und eine reproduzierbare und hohe Qualität.

Die anmeldungsgemäße Werkzeugeinrichtung dient zur Herstellung einer Felge für wenigstens teilweise muskelbetriebene Fahrzeuge und insbesondere Fahrräder, wobei die Felge gegenüberliegende Felgenflanken, ein Felgenbett und einen Felgenboden aufweist, an dem sich insbesondere im radial innersten Punkt die Felgenflanken treffen. Die Werkzeugeinrichtung umfasst mehrere Werkzeugkomponenten und darunter zwei Formeinrichtungen und eine Ringeinrichtung. Die Formeinrichtungen weisen jeweils Kontaktflächen zur Ausbildung jeweils einer Felgenflanke auf. Die Ringeinrichtung umfasst eine Mehrzahl umfänglich zusammengesetzter Ringsegmente. Die Ringeinrichtung weist im radial inneren Bereich eine Kontaktfläche zur Ausbildung des Felgenbettes auf.

Die Werkzeugeinrichtung ist sehr vorteilhaft und bietet die Möglichkeit der Herstellung von hochwertigen und reproduzierbaren Felgen insbesondere für Fahrräder.

Besonders bevorzugt bestehen die Formeinrichtungen und/oder die Ringeinrichtung aus einem Leichtmetall und sind insbesondere spanend gefertigt und/oder bearbeitet. Vorzugsweise sind die Formeinrichtungen und/oder deren Einheiten an den Kontaktflächen mit der herzustellenden Felge poliert. Das erhöht noch einmal die Qualität der herzustellenden Felge. Möglich ist auch eine gezielte Oberflächenrauigkeit.

Die Ringeinrichtung kann insbesondere eine Ringeinheit (mit einem Kern) aus einem weniger elastischen Material und wenigstens einen Ringüberzug aus einem stärker elastischen Material umfassen. Der Ringüberzug bildet dann die Kontaktfläche oder wenigstens einen Teil der Kontaktfläche zur Ausbildung des Felgenbettes aus. Insbesondere bestehen die Formeinrichtungen auch aus einem weniger elastischen Material als der Ringüberzug. Dadurch kann der Ringüberzug elastisch nachgeben und den nötigen Druck auf die Felgenhörner und/oder das Felgenbett aufbauen und weitergeben. Der Ringüberzug besteht insbesondere wenigstens zum Teil aus einem gummielastischen oder gummiartigen Werkstoff. Der Ringüberzug besteht besonders bevorzugt wenigstens zum Teil oder im Wesentlichen oder nahezu vollständig oder vollständig aus einem Silikonwerkstoff. Möglich ist (auch) die Verwendung von Silikonelastomeren, Polyurethanen oder wenigstens einem Silikonkautschuk. Die Ringeinheit (bzw. der Kern) besteht vorzugsweise im Wesentlichen oder (nahezu) vollständig aus wenigstens einem metallischen Werkstoff. Praktisch bildet hier die Ringeinheit einen weniger elastischen (oder härteren) Kern mit einem elastischeren Ringüberzug daran.

Insbesondere umfasst die Werkzeugeinrichtung wenigstens ein Hilfsformteil, welches zusammen mit einer der Formeinrichtungen eine Formfläche für den Felgenboden ausbildet. Möglich ist es auch, dass für beide Formeinrichtungen jeweils ein Hilfsformteil zur Verfügung gestellt wird. Dann kann wahlweise eine der Formeinrichtungen mit dem zugehörigen Hilfsformteil verwendet werden. Das Hilfsformteil kann in den Abmessungen so angepasst sein, dass sich nach der Auftragung der Lackschichten auf die zugehörige Formeinrichtung und der Verbindung von Formeinrichtung und Hilfsformteil eine glatte (und stetige) Oberfläche in dem Bereich des Felgenbodens ergibt. Möglich und bevorzugt ist insbesondere auch, dass das Hilfsformteil einen geringen Rücksprung aufweist, damit Platz für die äußerste Faserlage an der anderen Formeinrichtung verbleibt.

Es ist möglich und bevorzugt, dass die Formeinrichtungen und/oder die Ringeinrichtung und/oder das Hilfsformteil miteinander korrespondierende Ausrichteinheiten aufweisen. Darüber kann eine Ausrichtung der einzelnen Formeinrichtungen und der Ringeinrichtung bzw. des Hilfsformteils zueinander reproduzierbar sichergestellt werden. Zur Befestigung der Formeinrichtungen und der Ringeinrichtung bzw. des Hilfsformteils aneinander sind insbesondere entsprechende Befestigungsmittel vorgesehen, die an entsprechende Befestigungsöffnungen oder an den Ausrichteinheiten montiert werden können. Beispielsweise können Schrauben, Stifte, Nieten, Klemmen oder Rastteile oder dergleichen als Befestigungsmittel eingesetzt werden.

In allen Ausgestaltungen ist es bevorzugt, dass die Formeinrichtungen und die Ringeinrichtung jeweils ein Gewicht kleiner 35 Kilo und insbesondere kleiner 30 Kilo oder kleiner 25 Kilo und besonders bevorzugt, kleiner 20 Kilo oder 15 Kilo aufweisen. Insbesondere weist wenigstens eine Formeinrichtung ein Gewicht kleiner 15 oder kleiner 12 oder kleiner 10 kg auf. Vorzugsweise weisen die beiden Formeinrichtungen und die Ringeinrichtung im zusammengebauten Zustand ein Gesamtgewicht kleiner 35 Kilo oder kleiner 30 Kilo oder sogar kleiner 20 Kilo auf. Dadurch würde es einer Person ermöglicht, die einzelnen Einheiten und die Werkzeugeinrichtung insgesamt auch allein und ohne fremde Hilfe zu bewegen. Jedenfalls ist eine bequeme Handhabung zu zweit möglich. Das erleichtert die Herstellung.

Dadurch, dass die Werkzeugeinrichtung kompakte Formeinrichtungen und eine kompakte Ringeinrichtung umfasst, die als Dreh- oder Frästeil hergestellt werden, sinken die Fertigungskosten für eine Werkzeugeinrichtung ganz erheblich. Dadurch wird es ermöglicht, eine größere Anzahl von Werkzeugeinrichtungen für eine parallele Produktion einzusetzen. Es können bei geringeren Kosten Felgen mit höherer Qualität hergestellt werden, welche zudem nur eine sehr geringe oder gar keine Nacharbeit der Sichtflächen benötigen.

Weitere Vorteile und Merkmale der vorliegenden Erfindung ergeben sich aus den Ausführungsbeispielen, die im Folgenden mit Bezug auf die beiliegenden Figuren erläutert werden.

In den Figuren zeigen:
- Figur 1: eine schematische Darstellung eines Mountainbikes mit anmeldungsgemäßen Felgen;
- Figur 2: eine schematische Darstellung eines Rennrades mit anmeldungsgemäßen Felgen;
- Figur 3: eine schematische Gesamtansicht einer anmeldungsgemäßen Werkzeugeinrichtung zur Herstellung einer anmeldungsgemäßen Felge;
- Figur 4: eine Explosionsdarstellung der verschiedenen Komponenten der Werkzeugeinrichtung nach Figur 3;
- Figur 5: eine Formeinrichtung und ein Hilfsformteil der Werkzeugeinrichtung nach Figur 4;
- Figur 6: zwei geschnittene Darstellungen der Werkzeugeinrichtung bei der Herstellung einer Felge;
- Figur 7: eine schematische Querschnittsdarstellung einer fertigen anmeldungsgemäßen Felge;
- Figur 8: zwei geschnittene Darstellungen der Werkzeugeinrichtung; und
- Figur 9: verschiedene Schnittdarstellungen bei der Herstellung anmeldungsgemäßer Felgen.

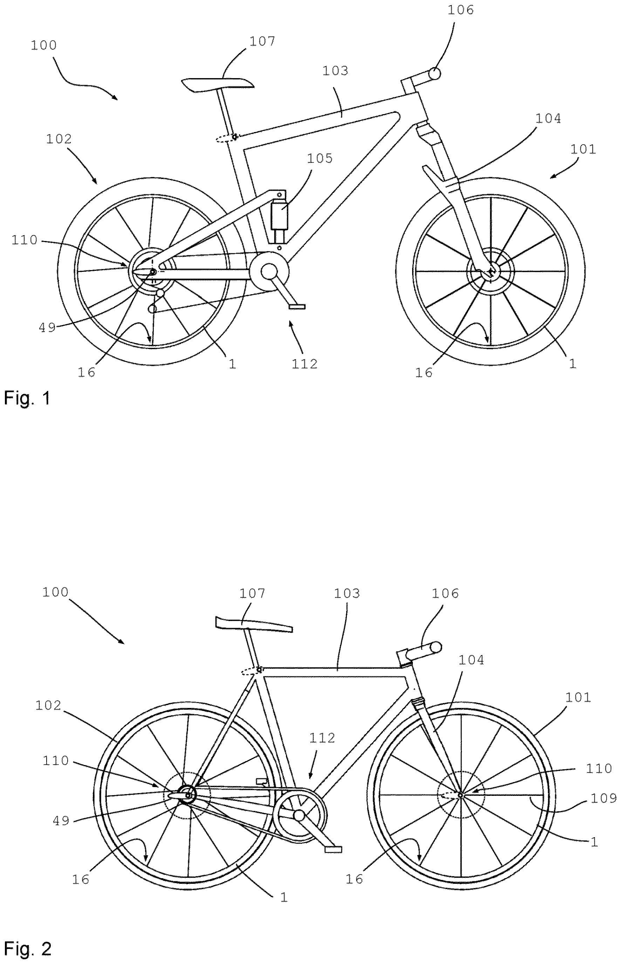

In den Figuren 1 und 2 sind jeweils ein Mountainbike bzw. ein Rennrad 100 dargestellt, die jeweils mit anmeldungsgemäßen Felgen 1 ausgerüstet sind. Das Mountainbike bzw. Rennrad 100 verfügt jeweils über ein Vorderrad 101 und ein Hinterrad 102, an denen jeweils anmeldungsgemäße Felgen 1 eingesetzt sind. Die beiden Räder 101, 102 verfügen über Speichen 109, um die Felge 1 mit den Naben 110 zu verbinden. An der Felge 1 sind dazu Speichenlöcher 16 vorgesehen.

Ein Rad 100 verfügt über einen Rahmen 103, einen Lenker 106, einen Sattel 107, eine Gabel bzw. Federgabel 104 und im Falle des Mountainbikes kann ein Hinterraddämpfer 105 vorgesehen sein. Zum Antrieb dient eine Tretkurbel 112 mit Pedalen. Gegebenenfalls kann ein elektrischer Hilfsantrieb an der Tretkurbel 112 und oder den Rädern vorgesehen sein. Die Nabe 110 der Räder kann jeweils über ein Spannsystem 49 (zum Beispiel eine Steckachse oder einen Schnellspanner) an dem Rahmen befestigt sein.

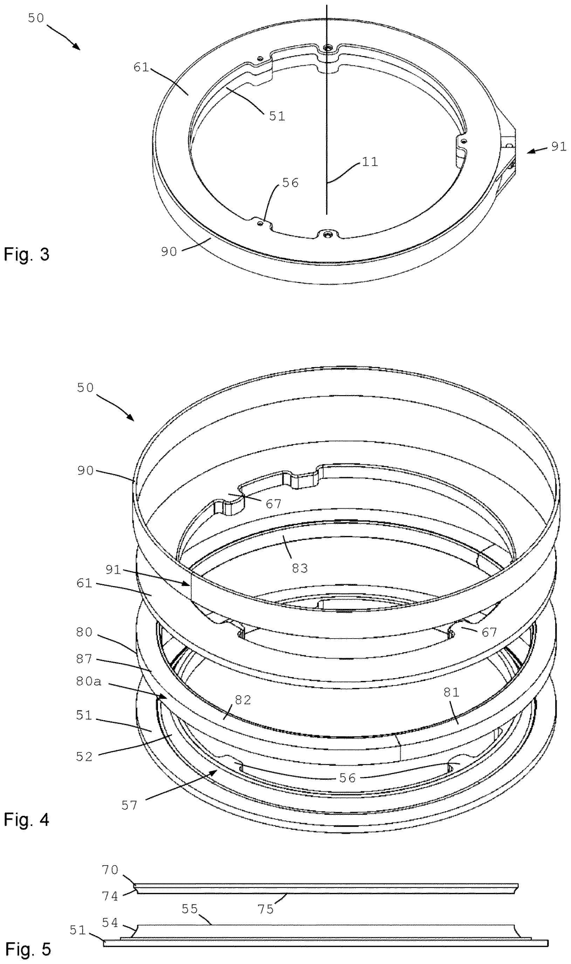

Figur 3 zeigt die Werkzeugeinrichtung 50 im zusammengebauten Zustand mit schon eingelegten Faserlagen zur Herstellung der Felge 1, bevor die Werkzeugeinrichtung 50 in eine separate Presseinrichtung eingelegt wird, in der die Werkzeugeinrichtung 50 auch beheizt wird, um das Aushärten des Faserverbundwerkstoffs zu beschleunigen. Die Werkzeugeinrichtung 50 ist im Wesentlichen rotationssymmetrisch um eine Symmetrieachse 11 ausgebildet, die jedenfalls eine Symmetrieachse für die fertige Felge 1 bildet.

Figur 4 zeigt eine Explosionsdarstellung der Werkzeugeinrichtung 50, wobei zuoberst ein Schließring 90 abgebildet ist, der über einen Klemmabschnitt 91 und eine hier nicht sichtbare Schraube verfügt. Der Schließring 90 kann um die weiteren Komponenten der Werkzeugeinrichtung 50 gelegt werden und kann als Klemmring dienen. Gegebenenfalls kann auf diesen Schließring 90 verzichtet werden.

Als unterstes Element ist eine Formeinrichtung 51 zu sehen, die eine Flankenkontaktfläche 52 aufweist, die zur Ausbildung einer der beiden Felgenflanken der herzustellenden Felge 1 dient. An der Formeinrichtung 51 sind Befestigungsmittel 56 und Ausrichteinheiten 57 ausgebildet oder angeordnet, mit der die Formeinrichtung 51 mit der Ringeinrichtung 80 und der anderen Formeinrichtung 61 über entsprechende Befestigungsmittel 56 oder an den Ausrichteinheiten 57 befestigt wird. Die Ringeinrichtung weist Ausrichteinheiten 87 und die andere Formeinrichtung 61 weist Ausrichteinheiten 67 auf.

Wie in Figur 4 zu erkennen, besteht die Ringeinrichtung 80 aus mehreren Ringsegmenten 81-83 die sich in Umfangsrichtung um die zentrale Symmetrieachse 11 herum erstrecken. Dadurch können die Ringsegmente bei der Entnahme einzeln entnommen werden.

Figur 5 zeigt eine Formeinrichtung 51 und das zugehörige Hilfsformteil 70, die miteinander verbunden werden, um die Flankenkontaktfläche 72 und die Felgenbodenbereiche 54 und 74 mit Faserlagen des Faserverbundwerkstoffs zu belegen. Dadurch wird der Bereich des Felgenbodens durch eine gemeinsame durchgehende Lage verstärkt.

Die Formeinrichtung 61 und das Hilfsformteil 70 werden an den Trennflächen 55 und 75 miteinander verbunden bzw. aufeinandergelegt.

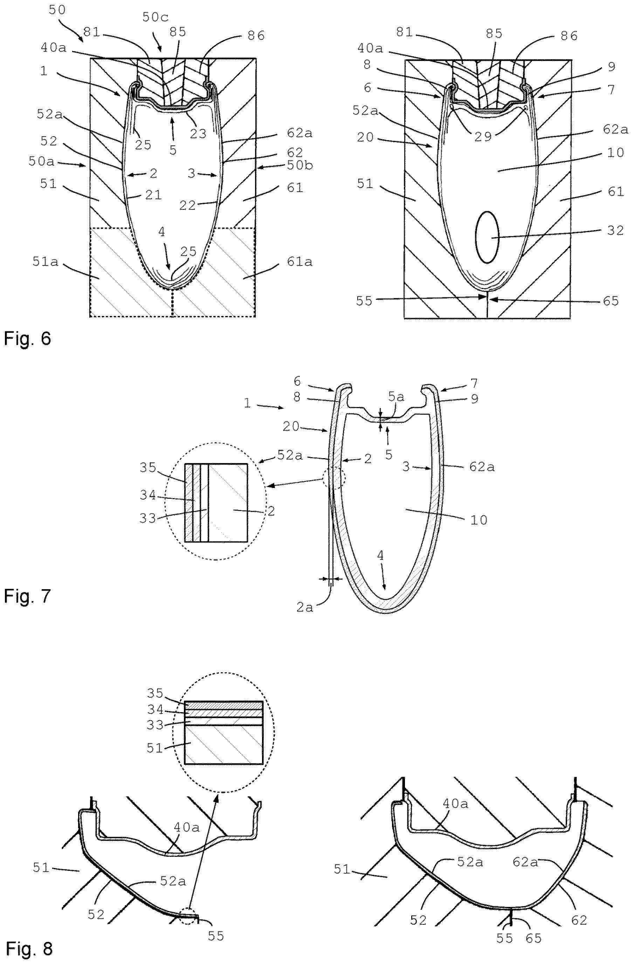

Figur 6 zeigt zwei schematische Darstellungen der Werkzeugeinrichtung 50 mit darin angeordneten Faserlagen 21-23 und 25. Die Werkzeugeinrichtung umfasst Werkzeugkomponenten 50a, 50b und 50c und besteht im zusammengebauten Zustand im Wesentlichen aus einer ersten Formeinrichtung 51, einer zweiten Formeinrichtung 61 und der Ringeinrichtung 80, die wiederum (in Umfangsrichtung) aus mehreren Ringsegmenten 81-83 (vergleiche Figur 4) und (in axialer Richtung) Ringsegmenten 85, 86 besteht.

Gegebenenfalls können die Formeinrichtungen 51 und 61 auch mehrteilig ausgebildet sein und beispielsweise zusätzlich Formteile 51a und 61a umfassen. Vorzugsweise sind die Formeinrichtungen 51 und 61 aber jeweils einteilig ausgebildet. Die Formeinrichtung 51 weist eine Flankenkontaktfläche 52 für die linke Felgenflanke 2 auf, während die rechte Felgenflanke 3 durch eine Flankenkontaktfläche 62 geformt wird. Auf die Flankenkontaktflächen 52 bzw. 62 sind Faserlagen 21 bzw. 22 aufgelegt. Im Bereich des Felgenbodens 4 sind noch Verstärkungslagen 25 aufgebracht. Das Felgenbett 5 wird durch wenigstens einer Faserlage 23 gebildet, die radial innen auf die Ringeinrichtung 80 aufgetragen wird.

Die beiden in Figur 6 dargestellten Felgen 1 verfügen jeweils über Felgenhörner 6, 7, die durch Faserlagen 21, 23 und 25 ausgebildet werden. Die später von außen seitlich sichtbaren Außenflächen 8 bzw. 9 der beiden Felgenflanken 2, 3 werden jeweils durch die erste auf die Flankenkontaktfläche 52 aufgelegte Faserlage 21 bzw. durch die erste auf die Flankenkontaktfläche 62 aufgelegte erste Faserlage 22 gebildet. Der Sichtbereich des Felgenbettes wird durch die erste Faserlage 23 geformt, die auf die Ringeinrichtung 80 aufgelegt wurde.

Nach der Herstellung bzw. dem Aushärten einer ersten bzw. der vorhergehenden Felge wird die Felge aus der Werkzeugeinrichtung 50 entnommen. Die Werkzeugeinrichtung 50 hat dann z. B. noch eine Temperatur von 25°C oder 30°C und kann offen einige Minuten (z.B. 10 bis 30 Minuten) abkühlen. Nach dem Säubern und Vorbereiten inkl. Auftrag einer etwaigen Primer-Schicht wird vorzugsweise bei (etwa) Raumtemperatur eine erste Lackschicht (vernebelt) aufgesprüht. Nach kurzem Aushärten (z. B. 5 bis 10 Minuten) werden entsprechend vorzugsweise zwei weitere Lackschichten aufgetragen. Eventuell kann die Werkzeugeinrichtung 50 auf eine Temperatur von 40°C oder 60°C oder 80°C aufgeheizt werden. Ein Aushärten geht aber auch an "Luft" bei Raumtemperatur. Das Aushärten kann je nach Temperatur zwischen 1 Minute und 15 Minuten benötigen. Eventuell kann eine (sanfte) Luftströmung unterstützend wirken.

Vorzugsweise werden (insbesondere nur) Felgen für den Einsatz mit Scheibenbremsen hergestellt. Insbesondere werden nur die im späteren bestimmungsgemäßen regelmäßigen Betrieb sichtbaren Außenflächen lackiert. Das Lackieren der Felgenflanken erfolgt vorzugsweise bis zu den äußeren Hornspitzen. Grundsätzlich kann man auch die Oberfläche im Bereich des Felgenbettes entsprechend lackieren. Die Oberfläche der Form kann über z.B. Laserstrukturierung (leicht) angeraut werden. Eine Eloxierung der Felgenkontaktflächen der Werkzeugeinrichtung kann auch eine (oft gewünschte) matte Oberfläche der Felgenflanken bewirken.

Das Auftragen der Lackschichten 52a, 62a erfolgt insbesondere vor dem Zusammenbau der Werkzeugeinrichtung 50 aus den Werkzeugkomponenten 50a, 50b und 50c bzw. den Formeinrichtungen 51 und 61 und der Ringeinrichtung 80. Bei diesen werden vorzugsweise separat bzw. einzeln die Flankenkontaktflächen 52, 62 mit Lackschichten 52a, 62a besprüht bzw. diese werden darauf aufgetragen. Die resultierenden Lackschichten sind so dünn, dass sie im Maßstab der (an sich nicht maßstäblichen Figur 6) nicht zu erkennen sind, sondern praktisch strichförmig sind. Die resultierende Schichtdicke beträgt regelmäßig weniger als 0,5 mm. Vorzugsweise bilden mehrere Lagen des Lacks eine (gemeinsame) Lackschicht aus.

Die Lackschichten werden während der Aushärtung der Felge 1 von der Form auf den Faserverbundwerkstoff übertragen und fest damit verbunden. Somit wird schließlich die Felge 1 mit der darauf anhaftenden Lackschicht entnommen.

Die im Betrieb äußeren "Sichtflächen" bzw. fühlbaren Flächen werden durch die Lackschichten gebildet, die regelmäßig wenigstens teiltransparent sind. Somit werden alle Sichtflächen bzw. alle Sichtlagen der fertigen Felge 1 durch die Faserlagen 21-23 zur Verfügung gestellt, die jeweils separat und vollflächig auf die Formeinrichtungen 51 bzw. 61 und die Ringeinrichtung 80 aufgelegt werden. Dadurch kann eine besonders hohe Oberflächenqualität erreicht werden, da Lufteinschlüsse oder sonstige Fehlstellen besser vermieden können, als im Stand der Technik.

Um von innen während des Aushärtens Druck ausüben zu können, wird regelmäßig ein (nur schematisch eingezeichneter) Schlauch 32 eingelegt, der über die spätere Ventilöffnung nach außen geführt werden kann und der nach dem Schließen der Werkzeugform (Werkzeugeinrichtung 50) mit Druck beaufschlagt werden kann, um die einzelnen Faserlagen 21-25 von innen gegen die Innenwandungen der Werkzeugeinrichtung 50 zu pressen. Dadurch kann ein zuverlässiger Verbund gesichert werden. Der Schlauch 32 kann elastisch ausgebildet sein und sich beim Aufpumpen ausdehnen. Möglich und bevorzugt ist es auch, dass der Schlauch 32 groß genug oder passend groß ausgebildet ist und beim Einlegen vollflächig auf wenigstens eine Flankenkontaktfläche und radial von innen vollflächig auf die Ringeinrichtung aufgelegt wird.

Die Ringeinrichtung kann insbesondere eine Ringeinheit 80a (als Kern) aus einem weniger elastischen Material und (wenigstens) einen Ringüberzug 40a aus einem elastischeren Material wie einem Gummimaterial oder einem Silikonwerkstoff aufweisen. Der Ringüberzug 40a ist dann in dem Bereich der Felgenhörner und des Felgenbettes angeordnet und übt Druck auf die zu bildenden Felgenwandungen aus. Dadurch kann die Qualität gesteigert werden.

Gegebenenfalls ist es möglich, wie in dem rechten Teil von Figur 6 zu erkennen, dass umlaufende Faserstränge oder Faserbündel in dem Schnittbereich von Felgenflanke und Felgenbett eingelegt werden, um die Bereiche dort zu verstärken und noch stabiler zu gestalten.

Figur 7 zeigt eine stark schematische Darstellung einer fertigen Felge 1, die hier nicht maßstäblich abgebildet ist. Die Felge 1 verfügt über einen Felgenboden 4, ein Felgenbett 5 und Felgenflanken 2, 3 mit daran ausgebildeten Felgenhörnern 6, 7. Vergrößert und schraffiert dargestellt sind in dem äußeren Bereich der Felgenflanken die resultierende Lackschichten 52a, 62a, die von der Herstellform auf die Felge übertragen wurden. Die Lackschicht 52a kann dabei aus mehreren nacheinander auf die Werkzeugkomponenten 50a, 50b bestehenden Lackschichten 33-35 bestehen, die insgesamt die resultierende Schichtdicke 2a (an der Felgenflanke 2) ergibt. Typisch sind resultierende Schichtdicken der Lackschicht von zwischen etwa 0,2 mm und 0,7 mm. Meist wird eine resultierende Schichtdicke von etwa 0,3 mm bis 0,5 mm eingestellt. Im Inneren ist eine Hohlkammer 10 zu sehen. Die Felge 1 wird mit einem anmeldungsgemäßen Verfahren und einer anmeldungsgemäßen Werkzeugeinrichtung aus wenigstens einem Faserverbundwerkstoff hergestellt.

Figur 8 zeigt zwei stark schematische Darstellungen der Werkzeugeinrichtung 50 mit den Werkzeugkomponenten 50a, 50b und 50c bei der Herstellung. Auf die Flankenkontaktflächen 52 und 62 der Formeinrichtungen 51 und 61 wurden nacheinander mehrere Lackschichten 33, 34 und 35 aufgetragen, die insgesamt eine Lackschicht 52a auf der Flankenkontaktfläche 52 der Formeinrichtung 51 ergeben. Entsprechend wird auch die andere Formeinrichtung 61 in dem Bereich der Flankenkontaktfläche 62 beschichtet. Gegebenenfalls wird auch die Ringeinrichtung 80 oder der Ringüberzug 40a der Ringeinrichtung 80 mit einer Lackschicht versehen, die beim Aushärten der Felge auf deren Wandungen übertragen wird.

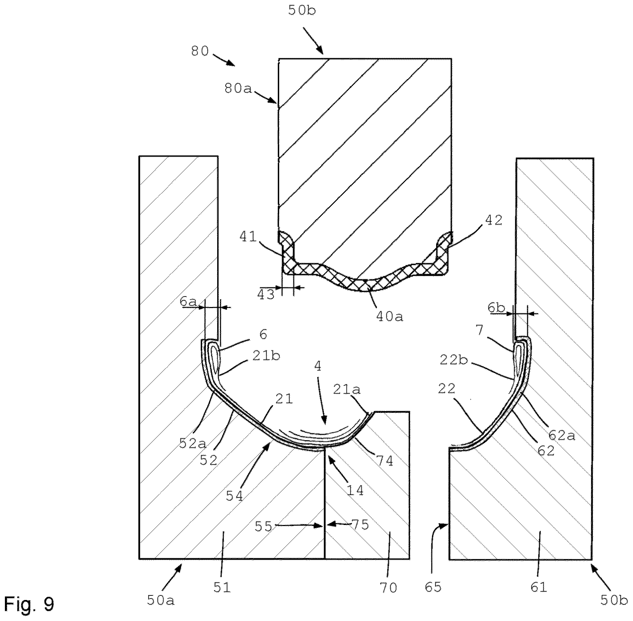

Figur 9 zeigt eine stark schematische Darstellung der Faserlagen an einer Werkzeugeinrichtung 50, wobei der Verlauf und die Lage der Faserlagen 21-23 und 25 absichtlich grob skizziert sind, um den Verlauf der einzelnen Faserlagen anschaulich zu erläutern. Hier ist erkennbar, dass die Faserlage 21 nicht nur auf die Flankenkontaktfläche 52 der Formeinrichtung 51 aufgelegt wurde, sondern auch auf den Felgenbodenbereich 74 des Hilfsformteils 70, um später in dem Bereich der Felgenbettkontaktfläche 62 der anderen Formeinrichtung 61 einen Verstärkungsabschnitt 21a zu bilden. Dadurch wird im Bereich des Felgenbodens ein Überlapp der einzelnen Faserlagen von der einen Felgenflanke zu der anderen Felgenflanke ermöglicht.

Es können umlaufende Faserstränge 29 in dem Kreuzungsbereich 15 von den Felgenhörnern 6, 7 mit dem Felgenbett 5 bzw. den Felgenflanken 2, 3 vorgesehen sein.

Im unteren Bereich von Figur 9 sind die Trennflächen 55 und 65 und 75 der beiden Formeinrichtungen 51 und 61 und des Hilfsformteils 70 zu erkennen, an denen die beiden Formeinrichtungen 51 und 61 bzw. das Hilfsformteil 70 aneinandergefügt werden.

In Figur 9 ist der Zustand dargestellt, nachdem die ausgewählte Formeinrichtung 51 mit dem Hilfsformteil 70 verbunden und darauf Faserlagen 21 und Verstärkungslagen 25 aufgelegt wurden. Anschließend kann das Hilfsformteil 70 entfernt werden und die Ringeinrichtung 80 an die ausgewählte Formeinrichtung 51 angelegt werden.

Dann ergibt sich eine auch schon in Figur 6 zu erkennende Lagenstruktur. Nach dem Entfernen des Hilfsformteils 70 behalten aufgrund der Eigensteifigkeit der verwendeten Prepregs 30 die Faserlagen 21-23 und 25 des überstehenden Verstärkungsabschnitts 21a und die entsprechenden überstehenden Bereiche der Faserlagen 25 (im Wesentlichen) ihre Form. Im Anschluss daran kann die andere Formeinrichtung 61 auf die (ausgewählte) Formeinrichtung 51 und die Ringeinrichtung 80 aufgelegt werden, sodass sich insgesamt ein geschlossenes Felgenprofil für die Felge 1 ergibt. Dabei wird dann im Bereich des Felgenhorns 7 die auf die Formeinrichtung 61 aufgelegte Faserlage 22 gegen die Faserlage 23 an der Ringeinrichtung 80 gedrückt. Im Bereich des Felgenbodens wird die Faserlage 22 gegen den Verstärkungsabschnitt 21 gedrückt. Der im weiteren Verlauf im Inneren der Hohlkammer 10 der Felge 1 aufgepumpte Schlauch 32 drückt dann alle Lagen zuverlässig aneinander und nach außen an die Formeinrichtungen 51 und 62 und die Ringeinrichtung 80 an.

Die optisch besonders wichtigen Außenflächen der fertigen Felge werden hochwertig ausgebildet, da die jeweilig äußeren Faserlagen 21, 22 und 23, die die Sichtlagen der fertigen Felge 1 bilden, jeweils vollflächig und separat an die entsprechenden Kontaktflächen (Flankenkontaktflächen 52, 62 und Felgenbettkontaktfläche 84) angedrückt wurden. Die äußere Lackschicht erhöht die Qualität nochmals deutlich.

Figur 9 zeigt den Zustand, nachdem eine erste Faserlage 21 auf die Felgenkontaktfläche 52 der ausgewählten Formeinrichtung 51 und den Felgenbodenbereich 74 des Hilfsformteils 70 aufgelegt wurde. Des weiteren wurden Verstärkungslagen 25 aufgelegt, die an der Formfläche 14 des Felgenbodens 4 anliegen und die entsprechende Form einnehmen. Im linken Teil von Figur 9 liegen die Trennflächen 55 und 75 der Formeinrichtung 51 und des Hilfsformteils 70 noch aneinander an.

Im radial äußeren Bereich ist zu erkennen, dass im Bereich des Felgenhorns 6 die Faserlage 21 umgeschlagen wurde und einen umgeschlagenen und radial nach innen verlaufenden Abschnitt 21b bildet, um das Felgenhorn 6 dort zu verstärken.

In entsprechender Weise wird auch die andere Formeinrichtung 61 mit Faserlagen 22 bestückt, wobei sich die Faserlage 22 nur über die Flankenkontaktfläche 62 erstreckt. Aber auch dort wird ein Abschnitt 22b im Bereich des Felgenhorns 7 umgeschlagen.

Eine Wandstärke 43 bzw. Dicke eines Ringüberzugs 40a ist in Figur 9 eingezeichnet und entspricht hier etwa der Wandstärke 6a, 6b in dem Bereich der Felgenflanke 2, 3 oder des Felgenhorns 6, 7 (vgl. Figur 7). Die Wandstärke 43 kann auch nur halb so groß wie eingezeichnet sein oder auch 2 mm, 3 mm, 4mm oder auch 5 mm oder 6 mm betragen.

Insbesondere liegt die Wandstärke 43 in dem Bereich zwischen 1/10 und dem 10-fachen der minimalen Wandstärke 5a des Felgenbodens 5 und/oder kann bevorzugt zwischen 0,1 mm und 10 mm betragen. In besonders bevorzugten Ausgestaltungen liegt die Dicke 43 zwischen 1 mm und 6 mm und besonders bevorzugt z. B. bei 4 mm +/- 2 mm.

Im Anschluss wird das Hilfsformteil 70 vorsichtig entfernt und es wird die andere Formeinrichtung 61 mit der Trennfläche 65 an die Trennfläche 55 der (ausgewählten) Formeinrichtung 51 herangeführt und beide werden dort miteinander befestigt. Dies geschieht aber vorzugsweise erst nachdem die Ringeinrichtung 80 (in Figur 9 oben abgebildet) auf die ausgewählte Formeinrichtung 51 aufgelegt wurde.

In allen Ausführungen können die verschiedenen Faserlagen unter unterschiedlichen Winkeln zueinander aufeinander aufgelegt werden. So können bei einer Lage die Fasern (Kettfäden oder Schussfäden eines Gewebes) unter 30°, 60° oder auch unter 45° zur Umfangsrichtung der fertigen Felge ausgerichtet sein. Bei einer darüber angeordneten Lage können die entsprechenden Fasern unter einem anderen Winkel (z. B. einem anderen der angeführten Winkel) ausgerichtet sein.

Die Lackschichten 52a und 62a Verbinden sich während des Aushärtens mit den Wandungen der Felge und können wiederum bei der Entnahme leicht von den (metallischen) Wandungen 52, 62 der Formeinrichtungen gelöst werden.

Insgesamt stellt die Erfindung ein vorteilhaftes Verfahren und eine vorteilhafte Werkzeugeinrichtung zur Verfügung, womit Felgen 1 herstellbar sind, die eine hohe Qualität reproduzierbar aufweisen. Es ist möglich, ohne aufwendiges Nacharbeiten eine hohe Oberflächenqualität der äußeren sichtbaren Oberflächen zur Verfügung zu stellen. Eine zusätzliche und nachträgliche Auftragung einer Lackschicht oder eine Lackierung oder dergleichen ist nicht nötig. Das wird unter anderem auch dadurch ermöglicht, dass die äußeren Sichtlagen aller äußeren Oberflächen unmittelbar und direkt an die entsprechenden Lackschichten an den Formflächen der Werkzeugeinrichtung angedrückt werden können.

Das Herstellverfahren ist einfach und ermöglicht dadurch die Vermeidung von Fehlern und verringert die Ausschussrate.

Es ist mit der Erfindung möglich, direkt aus der Mold eine hohe Qualität der Felgen zu erzeugen, bei denen eine gute Widerstandsfähigkeit gegen Kratzer und Witterung ermöglicht wird. Kleine Fehlstellen werden erheblich reduziert. Deshalb kann regelmäßig auf eine nachträglich Ausbesserung verzichtet werden. Mit dem anmeldungsgemäßen Verfahren kann die zeit- und kostenintensive nachträgliche Lackierung der Bauteile entfallen. Die Optik, Haptik und die mechanischen Eigenschaften und auch die UV-, Kratz-, oder Chemikalienbeständigkeit kann verbessert werden. Es kann eine geringe (und geringere) Filmstärke aufgetragen werden, was ideal für den Leichtbau ist. Die Oberfläche kann Pinholefrei realisiert werden. Eine aufwendige nachträgliche Oberflächenvorbehandlung mit Füllern und Primern nach der Entnahme der Felge aus der Herstellform kann entfallen. Es ergibt sich eine Kostenreduktion durch die Zeitersparnis, da ein nachträgliches und separates Lackieren entfällt. Die Haftung zwischen Bauteil und «Lack» ist hervorragend und es ergibt sich eine hohe mechanische Beständigkeit, eine hohe klimatische Beständigkeit und ein hoher UV-Schutz für die Felge. Es kann eine verkaufsfähige Oberfläche "out of the mold" erreicht werden, bei der praktisch jegliche Nacharbeit (Schleifen/Putty/Lack) nicht nötig ist. Es ergibt sich eine höhere Effektivität und ein geringeres Gewicht dank geringer Filmstärke. Die Haftung von dem Lack an der Felge kann verbessert werden. Dadurch ergibt sich auch eine geringere Anfälligkeit auf Kratzer in der Oberfläche und eine allfällig verbesserte Decal-Haftung. Außerdem kann die Reproduzierbarkeit verbessert werden. Es ergibt sich auch eine verbesserte Umweltbilanz.

### Bezugszeichenliste:

| | | | |
|---|---|---|---|
| 1 | Felge | 52 | Flankenkontaktfläche |
| 2, 3 | Felgenflanke | 52a | Lackschicht |
| 2a | Lackschichtdicke | 54 | Felgenbodenbereich |
| 4 | Felgenboden | 55 | Trennfläche |
| 5 | Felgenbett | 56 | Befestigungsmittel |
| 5a | minimale Wandstärke | 57 | Ausrichteinheit |
| 6, 7 | Felgenhorn | 61 | Formeinrichtung |
| 8, 9 | Sichtfläche | 61a | Formeinheit |
| 10 | Hohlkammer | 62 | Flankenkontaktfläche |
| 11 | Symmetrieachse | 62a | Lackschicht |
| 14 | Formfläche Felgenboden | 64 | Felgenbodenbereich |
| 15 | Kreuzungsbereich | 65 | Trennfläche |
| 16 | Speichenloch | 67 | Ausrichteinheit |
| 20 | Faserverbundwerkstoff | 70 | Hilfsformteil |
| 21 | Faserlage, Sichtlage | 74 | Felgenbodenbereich |
| 21a | Verstärkungsabschnitt | 75 | Trennfläche |
| 21b | umgeschlagener Abschnitt | 77 | Ausrichteinheit |
| 22 | Faserlage, Sichtlage | 80 | Ringeinrichtung |
| 22b | umgeschlagener Abschnitt | 80a | Ringeinheit |
| 23 | Faserlage, Sichtlage | 80b | Material von 80a |
| 24 | Faserlage | 81-83 | Ringsegmente |
| 25 | Verstärkungslage | 84 | Felgenbettkontaktfläche |
| 29 | Faserstrang | 85,86 | Ringsegmente |
| 30 | Prepreg | 87 | Ausrichteinheit |
| 32 | Schlauch | 90 | Schließring |
| 33-35 | Lackschicht | 91 | Klemmabschnitt |
| 36 | resultierende Lackschicht | 100 | Fahrrad |
| | | 101 | Rad, Vorderrad |
| 40 | Überzug | 102 | Rad, Hinterrad |
| 40a | Ringüberzug | 103 | Rahmen |
| 40b | Material von 40a | 104 | Gabel, Federgabel |
| 41 | Pressring | 105 | Hinterraddämpfer |
| 42 | Pressring | 106 | Lenker |
| 43 | Dicke | 107 | Sattel |
| 50 | Werkzeugeinrichtung | 109 | Speiche |
| 50a-c | Werkzeugkomponente | 110 | Nabe |
| 51 | Formeinrichtung | 112 | Tretkurbel |
| 51a | Formeinheit | | |

## Patentansprüche

1. Verfahren zur Herstellung einer Felge (1) aus Faserverbundwerkstoff für mit einer Scheibenbremse ausgerüstete Laufräder von Fahrrädern (100) unter Verwendung einer Werkzeugeinrichtung (50), wobei die Werkzeugeinrichtung (50) eine Mehrzahl von Werkzeugkomponenten (50a-50c) aufweist, wobei die Werkzeugkomponenten (50a-50c) zwei Formeinrichtungen (51, 61) und eine Ringeinrichtung (80) umfassen, wobei die Formeinrichtungen (51, 61) jeweils eine Flankenkontaktfläche (52, 62) zur Ausbildung einer seitlichen Felgenflanke (2, 3) umfassen und die Ringeinrichtung (80) eine Felgenbettkontaktfläche (84) umfasst, mit folgenden Schritten:
- Es wird wenigstens ein Teil der Werkzeugkomponenten (50a-50c) bereitgestellt und es wird eine erste glatte Lackschicht (33) auf wenigstens eine Felgenkontaktfläche an den Werkzeugkomponenten (50a-50c) aufgebracht;
- Die erste glatte Lackschicht (33) wird getrocknet;
- Es wird eine erste Faserlage (21) des Faserverbundwerkstoffs auf die Flankenkontaktfläche (52) der Formeinrichtungen (51, 61) aufgebracht, welche die äußeren Faserlagen wenigstens eines überwiegenden Teils der Sichtfläche (8) der Felgenflanken (2, 3) bilden;
- Es wird wenigstens eine erste Faserlage (23) des Faserverbundwerkstoffs auf die Ringeinrichtung (80) aufgebracht, welche das Felgenbett (5) bildet;
- Die Werkzeugkomponenten (50a-50c) der Werkzeugeinrichtung (50) werden miteinander verbunden und die Werkzeugeinrichtung (50) wird verschlossen;
- Die Werkzeugeinrichtung (50) wird aufgeheizt und die Lackschicht (36) wird mit dem aushärtenden Faserverbundwerkstoff fest verbunden;
- Die Werkzeugeinrichtung (50) wird abgekühlt und die Felge (1) wird entnommen und es werden Speichenlöcher (16) eingebracht.

2. Verfahren nach dem vorhergehenden Anspruch, wobei die Formeinrichtungen (51, 61) mit den Flankenkontaktflächen (52, 62) bereitgestellt werden und eine erste glatte Lackschicht (33) auf die Flankenkontaktflächen (52, 62) der Formeinrichtungen (51, 61) aufgebracht wird, welche an der fertigen Felge (1) die äußere Oberfläche wenigstens eines überwiegenden Teils der Felgenflanken (2, 3) bildet,
und wobei auch die Ringeinrichtung (80) zunächst mit wenigstens einer glatten Lackschicht (37) versehen wird.

3. Verfahren nach einem der vorhergehenden Ansprüche, wobei wenigstens zwei oder drei glatten Lackschichten (33, 34) nacheinander aufgetragen werden und wobei nach dem Auftrag einer Lackschicht diese zunächst getrocknet bzw. ausgehärtet wird.

4. Verfahren nach einem der vorhergehenden Ansprüche, wobei die Lackschichten (33-35) bei einer Temperatur der Werkzeugkomponenten zwischen 10°C und 80°C aufgetragen werden.

5. Verfahren nach einem der vorhergehenden Ansprüche, wobei eine Gesamtdicke der resultierenden glatten Lackschicht (36) dünner als 0,7 mm ist
und wobei ein Trockengewicht der resultierenden Lackschicht (36) kleiner 7 Gramm beträgt
und wobei ein Gewichtsverhältnis des Trockengewichts der resultierenden Lackschicht (36) an dem Gesamtgewicht der Felge kleiner als 1,5% beträgt.

6. Verfahren nach einem der vorhergehenden Ansprüche, wobei wenigstens ein Lack verwendet wird, welcher aus einer Gruppe von Lacken entnommen ist, welche 1K- und 2K-Lacke, Lackschichten auf Basis von Isophthalsäure und/oder Neopentylglykol, Polyurethanlacke und Lacke auf Acrylatharzbasis umfasst.

7. Verfahren nach einem der vorhergehenden Ansprüche, wobei mittels wenigstens zweier Sprühdüsen wenigstens ein Muster aufgetragen oder eingebracht wird und wobei eine Typangabe oder ein Farbmuster eingebracht wird.

8. Verfahren nach einem der vorhergehenden Ansprüche, wobei die Werkzeugeinrichtung (50) zum Aushärten des Faserverbundwerkstoffes (20) und zum Verbinden mit der Lackschicht (33-35) auf eine Temperatur zwischen 100°C und 150°C temperiert wird.

9. Verfahren nach einem der vorhergehenden Ansprüche, wobei zusätzlich folgende Schritte durchgeführt werden:
- Es wird nach dem Auftragen der Lackschicht eine Formeinrichtung (51) der beiden Formeinrichtungen (51, 61) ausgewählt und bereitgestellt und es wird die erste Faserlage (21) des Faserverbundwerkstoffs auf die Flankenkontaktfläche (52) der ausgewählten Formeinrichtung (51) aufgebracht, welche als Sichtlage wenigstens einen überwiegenden Teil der Sichtfläche (8) der zugehörigen Felgenflanke (2) bildet;
- Es wird die andere Formeinrichtung (61) bereitgestellt und es wird (wenigstens) eine erste Faserlage (22) des Faserverbundwerkstoffs auf die Flankenkontaktfläche (62) der anderen Formeinrichtung (61) aufgebracht, welche als Sichtlage wenigstens einen überwiegenden Teil der Sichtfläche (9) der anderen Felgenflanke (3) bildet;
- Es wird auf die Ringeinrichtung (80), die eine umlaufende Felgenbettkontaktfläche (84) aufweist, wenigstens eine erste Faserlage (23) des Faserverbundwerkstoffs aufgebracht, welche das Felgenbett (5) bildet;
- Die Ringeinrichtung (80) wird an eine der Formeinrichtungen (51) angelegt und die andere Formeinrichtung (52) wird daran angelegt und die Ringeinrichtung (80) und die Formeinrichtungen (51, 61) werden miteinander verbunden.

10. Verfahren nach dem vorhergehenden Anspruch, wobei alle Faserlagen (21-23), die als Sichtlagen im bestimmungsgemäßen Gebrauch die sichtbaren Außenflächen (8, 9) bilden, an die Formeinrichtungen (51, 61) und die Ringeinrichtung (80) der Werkzeugeinrichtung (50) angedrückt werden, um einen vollflächigen Kontakt zwischen den Faserlagen (21-23) und den Flankenkontaktflächen (52, 62) zu gewährleisten und Fehlstellen an der sichtbaren Oberfläche (8, 9) zu verhindern.

11. Verfahren nach einem der beiden vorhergehenden Ansprüche, wobei ein zu der ausgewählten Formeinrichtung (51) passendes Hilfsformteil (70) der Werkzeugeinrichtung (50) mit der ausgewählten Formeinrichtung (51) verbunden wird, sodass die ausgewählte Formeinrichtung (51) zusammen mit dem Hilfsformteil (70) eine um eine Symmetrieachse (11) der Felge umlaufende Formfläche (14) für den Felgenboden (4) bildet, welche bereichsweise (54) auf der ausgewählten Formeinrichtung (51) und bereichsweise (74) auf dem Hilfsformteil (70) ausgebildet ist,
und wobei die erste Faserlage (21) nicht nur auf die Flankenkontaktfläche (52) der ausgewählten Formeinrichtung (51), sondern auch auf den Felgenbodenbereich (74) des Hilfsformteils (70) aufgebracht wird, um im Bereich des Felgenbodens eine durchgängige erste Faserlage (21) zu bilden,
und wobei das Hilfsformteil (70) anschließend von der ausgewählten Formeinrichtung (51) entfernt wird und wobei die beiden mit Faserlagen belegten Formeinrichtungen (51, 61) miteinander verbunden werden,
und wobei die auf die ausgewählte Formeinrichtung (51) aufgebrachte erste Faserlage (21) im Bereich der Flankenkontaktfläche (52) die Sichtlage mit der Sichtfläche (8) der zugehörigen Felgenflanke (2) und im Felgenbodenbereich (74) des Hilfsformteils (70) eine Verstärkungslage (25) des Felgenbodens (4) und nicht die Sichtlage mit der Sichtfläche (9) der anderen Felgenflanke (3) bildet.

12. Verfahren nach einem der vorhergehenden Ansprüche, wobei Felgenhörner (6, 7) an den beiden Felgenflanken (2, 3) ausgebildet werden und wobei ein Felgenhorn (6, 7) durch Faserlagen (21, 22) gebildet wird, welche auf eine der Formeinrichtungen (51, 61) und auf die Ringeinrichtung (80) aufgebracht sind,
und wobei an wenigstens einem Felgenhorn (6, 7) eine Faserlage (21, 22) am radial äußeren Rand umgeschlagen und radial nach innen zurück umgelegt wird.

13. Verfahren nach einem der vorhergehenden Ansprüche, wobei alle Sichtflächen an der fertigen Felge (1) durch die beiden Formeinrichtungen (51, 61) und die Ringeinrichtung gebildet werden.

14. Verfahren nach einem der vorhergehenden Ansprüche, wobei die mit den Faserlagen bestückte Werkzeugeinrichtung (50) evakuiert wird
und wobei die Werkzeugeinrichtung (50) in eine Presseinrichtung (95) eingebracht und beheizt wird.

15. Felge (1) für wenigstens teilweise muskelbetriebene Fahrzeuge und insbesondere Fahrräder (100) mit gegenüberliegenden Felgenflanken (2, 3), einem Felgenbett (5) und einem Felgenboden (4), an dem sich im radial innersten Punkt die Felgenflanken (2, 3) treffen, hergestellt aus wenigstens einem Faserverbundwerkstoff (20) mit einem Verfahren nach einem der vorhergehenden Ansprüche,
und wobei die im bestimmungsgemäßen Betrieb sichtbare äußere Oberfläche (8, 9) wenigstens überwiegend aus einer glatten Lackschicht gebildet wird, die vor dem Einbringen des wenigstens einen Faserverbundwerkstoffs (20) in die Herstellform eingebracht wurde
und wobei die im bestimmungsgemäßen Betrieb sichtbare äußere Oberfläche (8, 9) wenigstens überwiegend keine nach dem Entnehmen aus der Herstellform aufgebrachte Lackschicht/Lackierung aufweist.

## Claims

1. Method of manufacturing a rim (1) from a fibrous composite material for bicycle (100) wheels equipped with a disk brake, employing a tool device (50), wherein the tool device (50) comprises a plurality of tool components (50a-50c), wherein the tool components (50a-50c) comprise two molding devices (51, 61) and one circular device (80), wherein the molding devices (51, 61) each comprise a flank contact surface (52, 62) for forming a lateral rim flank (2, 3), and the circular device (80) comprises a rim well contact surface (84), with the following steps:
- At least part of the tool components (50a-50c) is provided, and a first smooth varnish coat (33) is applied to at least one rim contact surface on the tool components (50a-50c);
- The first smooth varnish coat (33) is dried;
- A first fiber layer (21) of the fibrous composite material is applied to the flank contact surface (52) of the molding devices (51, 61), forming the outer fiber layers of at least the greater part of the visible surface (8) of the rim flanks (2, 3);
- At least one first fiber layer (23) of the fibrous composite material is applied to the circular device (80), forming the rim well (5);
- The tool components (50a-50c) of the tool device (50) are interconnected, and the tool device (50) is closed/locked;
- The tool device (50) is heated up, and the varnish coat (36) firmly bonds with the hardening fibrous composite material;
- The tool device (50) is cooled down, and the rim (1) is removed, and spoke holes (16) are made.

2. The method according to the preceding claim, wherein the molding devices (51, 61) with the flank contact surfaces (52, 62) are provided, and a first smooth varnish coat (33) is applied to the flank contact surfaces (52, 62) of the molding devices (51, 61), forming on the finished rim (1) the outermost surface of at least a major part of the rim flanks (2, 3),
and wherein the circular device (80) is also first provided with at least one smooth varnish coat (37).

3. The method according to any of the preceding claims, wherein at least two or three smooth varnish coats (33, 34) are applied successively, and wherein following application, the varnish coat is first dried respectively hardened.

4. The method according to any of the preceding claims, wherein the varnish coats (33-35) are applied at a temperature of the tool components between 10°C and 80°C.

5. The method according to any of the preceding claims, wherein the total thickness of the resulting smooth varnish coat (36) is thinner than 0.7 mm,
and wherein the dry weight of the resulting varnish coat (36) is less than 7 grams,
and wherein the weight ratio of the dry weight of the resulting varnish coat (36) to the total weight of the rim is less than 1.5%.

6. The method according to any of the preceding claims, wherein at least one varnish is used which is taken from a group of varnishes including 1-pack and 2-pack varnishes, varnish coats based on isophthalic acid and/or neopentyl glycol, polyurethane coating, and varnishes based on acrylic resin.

7. The method according to any of the preceding claims, wherein at least one pattern is applied or incorporated by means of at least two spray nozzles, and wherein a type code or a color pattern is incorporated.

8. The method according to any of the preceding claims, wherein the tool device (50) for hardening the fibrous composite material (20) and for bonding with the varnish coat (33-35) is temperature-controlled to a temperature between 100°C and 150°C.

9. The method according to any of the preceding claims, wherein the following steps are carried out additionally:
- After applying the varnish coat, one molding device (51) of the two molding devices (51, 61) is selected and provided, and the first fiber layer (21) of the fibrous composite material is applied to the flank contact surface (52) of the selected molding device (51), which, constituting a visible layer, forms at least a major part of the visible surface (8) of the pertaining rim flank (2);
- The other of the molding devices (61) is provided, and (at least) one first fiber layer (22) of the fibrous composite material is applied to the flank contact surface (62) of the other of the molding devices (61), which, constituting a visible layer, forms at least a major part of the visible surface (9) of the other of the rim flanks (3);
- At least one first fiber layer (23) of the fibrous composite material is applied to the circular device (80), which comprises a circumferential rim well contact surface (84), forming the rim well (5);
- The circular device (80) is placed against one of the molding devices (51), and the other of the molding devices (52) is placed against it, and the circular device (80) and the molding devices (51, 61) are connected with one another.

10. The method according to the preceding claim, wherein all of the fiber layers (21-23), which in use as intended form the visible outer surfaces (8, 9) as visible layers, are pressed on the molding devices (51, 61) and the circular device (80) of the tool device (50), to ensure full-surface contact between the fiber layers (21-23) and the flank contact surfaces (52, 62), and to prevent flaws on the visible surface (8, 9).

11. The method according to any of the two preceding claims, wherein an auxiliary molding part (70) of the tool device (50) matching the selected molding device (51) is connected with the selected molding device (51), so that the selected molding device (51) together with the auxiliary molding part (70) forms a mold surface (14) for the rim base (4) circling an axis of symmetry (11) of the rim, which is configured in sections (54) on the selected molding device (51), and in sections (74), on the auxiliary molding part (70),
and wherein the first fiber layer (21) is not only applied to the flank contact surface (52) of the selected molding device (51), but also to the rim base region (74) of the auxiliary molding part (70), to form a continuous first fiber layer (21) in the region of the rim base,
and wherein the auxiliary molding part (70) is thereafter removed from the selected molding device (51), and wherein the two molding devices (51, 61) covered with fiber layers are interconnected,
and wherein the first fiber layer (21) applied to the selected molding device (51), forms the visible layer with the visible surface (8) of the pertaining rim flank (2) in the region of the flank contact surface (52), and in the rim base region (74) of the auxiliary molding part (70), forms a reinforcement layer (25) of the rim base (4) but does not form the visible layer with the visible surface (9) of the other of the rim flanks (3).

12. The method according to any of the preceding claims, wherein rim flanges (6, 7) are configured on the two rim flanks (2, 3), and wherein one rim flange (6, 7) is formed by fiber layers (21, 22), which are applied to one of the molding devices (51, 61) and to the circular device (80),
and wherein one fiber layer (21, 22) on at least one rim flange (6, 7) is folded over at its radially outwardly edge and is radially folded back inwardly.

13. The method according to any of the preceding claims, wherein all the visible surfaces on the finished rim (1) are formed by the two molding devices (51, 61) and the circular device.

14. The method according to any of the preceding claims, wherein the tool device (50) loaded with the fiber layers is evacuated,
and wherein the tool device (50) is inserted into a pressure device (95) and heated.

15. Rim (1) for at least partially muscle-powered vehicles and in particular bicycles (100) with opposite rim flanks (2, 3), a rim well (5) and a rim base (4), where the rim flanks (2, 3) meet in the radially most inwardly point, manufactured from at least one fibrous composite material (20) by way of a method according to any of the preceding claims,
and wherein the outer surface (8, 9) that is visible in operation as intended, is at least predominantly formed of a smooth varnish coat, which was inserted into the manufacturing mold prior to inserting the at least one fibrous composite material (20),
and wherein the outer surface (8, 9) visible in operation as intended, does not, at least predominantly, comprise a varnish coat applied after removal from the manufacturing mold.

## Revendications

1. Procédé de fabrication d'une jante (1) en matériau composite fibreux pour des roues de bicyclettes (100), qui sont équipées d'un frein à disque, en utilisant un dispositif d'outil (50), dans lequel ledit dispositif d'outil (50) comprend une pluralité de composants d'outil (50a -50c), dans lequel les composants d'outil (50a-50c) comprennent deux dispositifs de formage (51, 61) et un dispositif annulaire (80), dans lequel les dispositifs de formage (51, 61) comprennent chacun une surface de contact de flanc (52, 62) pour former un flanc de jante latéral (2, 3) et le dispositif annulaire (80) comprend une surface de contact de base de jante (84), avec les étapes suivantes:
- on fournit au moins une partie des composants d'outil (50a à 50c), et une première couche de laque lisse (33) est appliquée sur au moins une surface de contact de jante sur les composants d'outil (50a à 50c);
- la première couche de laque lisse (33) est séchée;
- une première couche de fibres (21) du matériau composite fibreux est appliquée sur la surface de contact de flanc (52) des dispositifs de formage (51, 61) qui forment les couches de fibres extérieures d'au moins une partie principale de la surface visible (8) des flancs de jante (2, 3);
- au moins une première couche de fibres (23) du matériau composite fibreux est appliquée sur le dispositif annulaire (80) qui forme la base de jante (5);
- les composants d'outil (50a-50c) du dispositif d'outil (50) sont reliés les uns aux autres et le dispositif d'outil (50) est fermé;
- le dispositif d'outil (50) est chauffé et la couche de laque (36) est fermement liée au matériau composite fibreux durcissant;
- le dispositif d'outil (50) est refroidi et la jante (1) est retirée et des trous de rayons (16) sont ménagés.

2. Procédé selon la revendication précédente, dans lequel les dispositifs de formage (51, 61) avec les surfaces de contact de flanc (52, 62) sont fournis, et une première couche de laque lisse (33) est appliquée sur les surfaces de contact de flanc (52, 62) des dispositifs de formage (51, 61), qui forme, sur la jante (1) finie, la surface extérieure d'au moins une partie principale des flancs de jante (2, 3),
et dans lequel le dispositif annulaire (80) est, elle aussi, d'abord pourvu d'au moins une couche de laque lisse (37).

3. Procédé selon l'une quelconque des revendications précédentes, dans lequel au moins deux ou trois couches de laque lisses (33, 34) sont appliquées les unes après les autres et dans lequel, après qu'une couche de laque a été appliquée, celle-ci est d'abord séchée ou bien durcie.

4. Procédé selon l'une quelconque des revendications précédentes, dans lequel les couches de laque (33-35) sont appliquées à une température des composants d'outil comprise entre 10 °C et 80 °C.

5. Procédé selon l'une quelconque des revendications précédentes, dans lequel une épaisseur totale de la couche de laque lisse résultante (36) est inférieure à 0,7 mm
et dans lequel un poids sec de la couche de laque résultante (36) est inférieur à 7 grammes
et dans lequel un rapport pondéral du poids sec de la couche de laque résultante (36) au poids total de la jante est inférieur à 1,5 %.

6. Procédé selon l'une quelconque des revendications précédentes, dans lequel on utilise au moins une laque qui est prise dans un groupe de laques qui comprend les laques à un composant et à deux composants, les couches de laque à base d'acide isophtalique et/ou de néopentylglycol, les laques polyuréthanes et les laques à base de résine acrylate.

7. Procédé selon l'une quelconque des revendications précédentes, dans lequel au moins un motif est appliqué ou inséré au moyen d'au moins deux buses de pulvérisation et dans lequel une information de type ou un motif de couleur est inséré(e).

8. Procédé selon l'une quelconque des revendications précédentes, dans lequel le dispositif d'outil (50) est porté à une température comprise entre 100 °C et 150 °C pour durcir le matériau composite fibreux (20) et pour lier celui-ci à la couche de laque (33-35).

9. Procédé selon l'une quelconque des revendications précédentes, dans lequel, en sus, les étapes suivantes sont mises en oeuvre:
- après l'application de la couche de laque, un dispositif de formage (51) parmi les deux dispositifs de formage (51, 61) est sélectionné et fourni, et la première couche de fibres (21) du matériau composite fibreux est appliquée sur la surface de contact de flanc (52) du dispositif de formage (51) sélectionné, qui, en tant que couche visible, forme au moins une partie principale de la surface visible (8) du flanc de jante (2) associé;
- l'autre dispositif de formage (61) est fourni, et (au moins) une première couche de fibres (22) du matériau composite fibreux est appliquée sur la surface de contact de flanc (62) de l'autre dispositif de formage (61), qui, en tant que couche visible, forme au moins une partie principale de la surface visible (9) de l'autre flanc de jante (3);
- au moins une première couche de fibres (23) du matériau composite fibreux, qui forme la base de jante (5), est appliquée sur le dispositif annulaire (80) qui présente une surface circonférentielle de contact de base de jante (84);
- le dispositif annulaire (80) est appliqué contre l'un des dispositifs de formage (51) et l'autre dispositif de formage (52) est appliqué contre ceci, et le dispositif annulaire (80) et les dispositifs de formage (51, 61) sont reliés entre eux.

10. Procédé selon la revendication précédente, dans lequel toutes les couches de fibres (21-23) qui, en tant que couches visibles, forment les surfaces extérieures visibles (8, 9) lorsqu'elles sont utilisées comme prévu, sont plaquées contre les dispositifs de formage (51, 61) et le dispositif annulaire (80) du dispositif d'outil (50) afin d'assurer un contact sur toute la surface entre les couches de fibres (21-23) et les surfaces de contact de flanc (52, 62) et pour éviter des défauts sur la surface visible (8, 9).

11. Procédé selon l'une quelconque des deux revendications précédentes, dans lequel une pièce de formage auxiliaire (70) du dispositif d'outil (50) qui est adaptée au dispositif de formage sélectionné (51) est reliée au dispositif de formage sélectionné (51) de sorte que le dispositif de formage sélectionné (51) forme conjointement avec la pièce de formage auxiliaire (70) une surface de formage (14) pour le fond de jante (4), qui s'étend autour d'un axe de symétrie (11) de la jante et qui est formée par zones (54) sur le dispositif de formage sélectionné (51) et par zones (74) sur la pièce de formage auxiliaire (70),
et dans lequel la première couche de fibres (21) est appliquée non seulement sur la surface de contact de flanc (52) du dispositif de formage sélectionné (51), mais également sur la zone de fond de jante (74) de la pièce de formage auxiliaire (70) afin de former une première couche de fibres continue (21) au niveau du fond de jante,
et dans lequel la pièce de formage auxiliaire (70) est ensuite retirée du dispositif de formage sélectionné (51) et dans lequel les deux dispositifs de formage (51, 61) recouverts de couches de fibres sont reliés l'un à l'autre,
et dans lequel la première couche de fibres (21) appliquée sur le dispositif de formage sélectionné (51) forme au niveau de la surface de contact de flanc (52) la couche visible avec la surface visible (8) du flanc de jante (2) associé et forme au niveau du fond de jante (74) de la pièce de formage auxiliaire (70), une couche de renforcement (25) du fond de jante (4) et non pas la couche visible avec la surface visible (9) de l'autre flanc de jante (3).

12. Procédé selon l'une quelconque des revendications précédentes, dans lequel des rebords de jante (6, 7) sont formés sur les deux flancs de jante (2, 3) et dans lequel un rebord de jante (6, 7) est formé par des couches de fibres (21, 22) qui sont appliquées sur l'un des dispositifs de formage (51, 61) et sur le dispositif annulaire (80),
et dans lequel une couche de fibres (21, 22) sur au moins un rebord de jante (6, 7) est rabattue sur le bord radialement extérieur et est repliée radialement vers l'intérieur.

13. Procédé selon l'une quelconque des revendications précédentes, dans lequel toutes les surfaces visibles sur la jante finie (1) sont formées par les deux dispositifs de formage (51, 61) et le dispositif annulaire.

14. Procédé selon l'une quelconque des revendications précédentes, dans lequel le dispositif d'outil (50) équipé des couches de fibres est évacué et dans lequel le dispositif d'outil (50) est introduit dans un dispositif de pressage (95) et chauffé.

15. Jante (1) pour des véhicules entraînés, au moins en partie, par force musculaire, et en particulier pour des bicyclettes (100), ayant des flancs de jante (2, 3) opposés, une base de jante (5) et un fond de jante (4) où les flancs de jante (2, 3) se rencontrent sur le point radialement le plus intérieur, fabriquée à partir d'au moins un matériau composite fibreux (20) à l'aide d'un procédé selon l'une quelconque des revendications précédentes,
et dans lequel la surface extérieure (8, 9) visible pendant le fonctionnement normal est formée au moins principalement à partir d'une couche de laque lisse qui a été introduite dans le moule de fabrication avant l'introduction dudit au moins un matériau composite fibreux (20),
et dans lequel la surface extérieure (8, 9) visible pendant le fonctionnement normal ne comprend au moins principalement aucune couche de laque/peinture appliquée après le retrait du moule de fabrication.
